(19) Europäisches Patentamt
European Patent Office
Office européen des brevets

(11) EP 4 375 317 A1

## (12) EUROPEAN PATENT APPLICATION

(43) Date of publication:
**29.05.2024 Bulletin 2024/22**

(21) Application number: **22209546.5**

(22) Date of filing: **25.11.2022**

(51) International Patent Classification (IPC):
**C08J 7/00** (2006.01)

(52) Cooperative Patent Classification (CPC):
**C03C 17/008; C08J 7/00;** C03C 2217/445;
C03C 2217/476; C03C 2217/70; C03C 2218/111;
C03C 2218/112

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **ETH Zurich
8092 Zurich (CH)**

(72) Inventors:
• POULIKAKOS, Dimos
  8702 Zollikon (CH)
• HÄCHLER, Iwan
  8303 Bassersdorf (CH)
• SCHNOERING, Gabriel
  8708 Männedorf (CH)
• ROY, Tamal
  8610 Uster (CH)

## (54) HEATING DEVICE FOR DE-MISTING OR ANTI-MISTING DEVICES SUCH AS VEHICLE LIGHTINGS

(57) A heating device (1) for preventing or removing a deposition comprises or consists of at least one photothermal element (2) being configured to exhibit a photothermal effect upon an impingement of electromagnetic radiation. The photothermal element (2) comprises or consists of particles (3) being embedded in a matrix (4). The matrix (4) is optically transmissive in a first wavelength region of the electromagnetic spectrum of impinging electromagnetic radiation. The particles (3) are configured to absorb impinging electromagnetic radiation in a second wavelength region of the electromagnetic spectrum and are further configured to dissipate the absorbed electromagnetic radiation as heat, whereby the temperature of the heating device (1) is elevated.

FIG. 1b

**Description**

TECHNICAL FIELD

The present invention relates to a heating device comprising a photothermal element according to claim 1, to a lighting device comprising such a heating device according to claim 7, to a vehicle comprising such a lighting device according to claim 10, to a method of producing such a heating device according to claim 11, and to the use of particles for producing a photothermal element of such a heating device according to claim 15.

PRIOR ART

Surface fogging is detrimental and undesirable for optical clarity of transparent surfaces [1] including electronic displays [2], windows [3], eyewear [4], cameras [5], and automotive lighting [6], to name a few.

Counteracting surface fogging to maintain surface transparency is thus significant to a variety of applications, including lighting devices such as automotive lighting. Current energy-neutral approaches mostly rely on engineering the surface wettability, but suffer from contaminant deposition and lack of robustness and hence require frequent maintenance or renewal. Furthermore, removing of condensed water droplets is often challenging for devices where the condensation takes place on an inaccessible surface or in a sealed enclosure, e.g., the inside surface of the lens of a car headlamp assembly [7]. At the same time, condensation of water droplets in automotive headlamps poses a severe risk of road accidents, especially during nighttime, when 50% of the total crashes in the U.S.A. occur [8]. A foggy headlamp can reduce the light output by up to 50% and thereby detrimentally impair the driver's vision [9]. The visibility is mainly reduced due to dropwise condensation of water on the headlight lens in cold and humid ambients, a phenomenon which can also be observed in the morning hours when a car is parked outside during the night. The variation of air temperature and pressure inside the headlamp assembly during operational and non-operational periods induce outward and inward air flow through the vent, respectively. The condensation occurs due to the ingress of humid air into the headlamp assembly and subsequent decrease in the ambient temperature below the dew point. While smaller condensed droplets take about 30-60 min for complete evaporation after the lamp is turned on, larger droplets and pooling of water take much longer times to disappear [10]. In addition, the persisting humidity in the enclosure causes damage to the lamp. In-operando inaccessibility of the affected surface necessitates the development of methods for rapid removal of the condensed droplets without manual intervention, while maintaining the transparency simultaneously. The state-of-the-art solutions for mitigating the problem relies only on eventual warming up of the headlamp cavity during operation [11], or blowing hot air on the surface [12].

Surface fogging and subsequent visibility hindrance are often mitigated by tailoring the wetting properties of the surface, and hence the liquid-solid adhesion [13]. Condensed water droplets scatter incident light from the curved interfaces, which reduce the fraction of transmitted light through the substrate. A widely accepted solution is to use chemistry in terms of a superhydrophilic coating, that increases the surface energy, and hence reduces the water contact angle (< 10°) which eventually forms a thin film of water and at least partially reinstates the transparency [14]. However, such high-energy surfaces are susceptible to contamination, coating partial removal and require periodic maintenance, or replacement.

On the other hand, superhydrophobic self-cleaning surfaces have also been studied for antifogging applications [15]. Superhydrophobic surfaces are prepared by applying a hydrophobic coating in combination with surface micro- and nanoroughness [16]. Such surfaces exhibit a high (> 150°) water contact angle and low contact angle hysteresis. This facilitates condensed water droplets to roll off the surface at the very early stage of their formation, when the surface is appropriately fabricated. However, water condensation in the crevices and subsequent Cassie-to-Wenzel transition potentially degrades the performance of such surfaces [17].

While passive approaches concentrate on wettability engineering, active methods for anti- and defogging applications rely on increasing the surface temperature. Fogging occurs at surface temperatures below the dew point of the surrounding air. Increasing the surface temperature by a few degrees is sufficient for fog removal because the nucleation rate is inversely and exponentially dependent on the temperature of the surface [18]. Active defogging methods for transparent substrates use electrical heating with transparent electrodes [19], [20]. There, electricity is dissipated into heat by Joule effect [21], [22], a process which is exergetically highly inefficient. Recent methods can use nanowires or vertically aligned graphene arrays as the electrically conductive layer [19], [20]. They, however, require complex fabrication steps and depend on an external power supply for the resistive heating.

Conversely, when defogging is required for maintaining transparency in front of a light source, this same source of radiative power can be utilized to increase the surface temperature by absorption. Solar radiation has often been harnessed for anti- and defogging applications on surfaces which contain metallic nanoparticles [21], [22]. For instance, Walker et al [21] demonstrated antifogging and enhanced defogging with a gold and $TiO_2$ nanoparticle-based absorbing metasurface under sunlight illumination. Similarly, Li et al [22] developed a transparent photothermal coating using a cesium-doped tungsten trioxide and benzotriazole nanoparticle dispersion for anti- and defogging applications, which can be used for sunlight-activated applications. It is worthwhile to mention that defogging is thermodynamically more difficult than preventing fog (antifogging). Also, once the surface temperature has increased and the surface is defogged, an antifogging effect remains due to the elevated surface temperature.

SUMMARY OF THE INVENTION

It is an object of the present invention to provide a heating device that allows to selectively prevent or remove a deposition in an improved manner.

This object is achieved with a heating device according to claim 1. That is, a heating device for preventing or removing a deposition, in particular for de-misting such as de-fogging or anti-misting such as anti-fogging, is provided. The heating device comprises or consists of at least one photothermal element being configured to exhibit a photothermal effect upon an impingement of electromagnetic radiation. The photothermal element comprises or consists of particles being embedded in a matrix. The matrix is optically transmissive in a first wavelength region of the electromagnetic spectrum of impinging electromagnetic radiation. The particles are configured to absorb impinging electromagnetic radiation in a second wavelength region of the electromagnetic spectrum and are further configured to dissipate the absorbed electromagnetic radiation as heat, whereby the temperature of the heating device is elevated.

Hence, the heating device according to the invention is configured to generate heat upon an impingement of electromagnetic radiation onto the photothermal element. In other words, the photothermal element is configured to perform a photothermal conversion of electromagnetic radiation, wherein it absorbs electromagnetic radiation and dissipates the electromagnetic radiation as heat, whereby the temperature of the heating device is elevated. The heating device according to the invention can thus be seen as a light-activated heating device that is selectively activated in dependence of the wavelength of the impinging electromagnetic radiation.

The matrix can be understood as a continuous phase in which a discontinuous phase, the particles, are dispersed. In other words, the matrix holds the embedded particles in place. Again in other words, the particles being embedded in the matrix can be seen as small and/or sparse inclusions in a dense medium that freezes the configuration and keeps them in place.

Optically transmissive means that the matrix is configured to transmit impinging electromagnetic radiation in the first wavelength region of the electromagnetic spectrum. In other words, impinging electromagnetic radiation in the first wavelength region of the electromagnetic spectrum is not or only partly absorbed by the matrix. In particular, the matrix is preferably optically transmissive such that it absorbs less than 20 % of incident electromagnetic radiation in the first wavelength region of the electromagnetic spectrum, more preferably less than 10 % of the incident electromagnetic radiation in the first wavelength region of the electromagnetic spectrum.

It is furthermore preferred that the transmissivity of the matrix is independent or almost independent of an angle of incidence under which the electromagnetic radiation impinges on the matrix. In fact, the matrix preferably is essentially a host material that holds the embedded particles.

The particles are configured to absorb impinging electromagnetic radiation in the second wavelength region of the electromagnetic spectrum and to perform a photothermal conversion of said electromagnetic radiation, wherein the absorbed electromagnetic radiation is dissipated as heat. In particular, the particles are preferably configured to absorb more than 50 % of incident electromagnetic radiation in the second wavelength region of the electromagnetic spectrum, more preferably more than 80 % of the incident electromagnetic radiation in the second wavelength region of the electromagnetic spectrum.

Said absorption can be measured with a UV-VIS/NIR photospectrometer as it is known in the art.

The heating device preferably is a passive heating device. That is, the heating device is preferably configured to produce heat by the photothermal element only and wherein no active heating is required. Again in other words, the heating device is preferably configured for wireless operation. As such, the heating device is maintenance-free.

The particles can be embedded in the matrix according to a determined arrangement. Alternatively, the particles can be embedded in the matrix according to an uncontrolled arrangement.

That is, the particles can be embedded in the matrix in a determined arrangement, for instance in an ordered pattern such as a (quasi-)periodic pattern. Such a determined arrangement could be produced, for instance, by microprinting or nanoprinting a dispersion of the particles, see also further below. Such a determined arrangement enables collective effects between the particles, e.g. inter-particle effects. For instance, the particles can be arranged such as to enhance some specific aspects of the electromagnetic spectrum, e.g. exhibiting a higher absorption resonance at narrower energy band. That is, the determined arrangement allows to exploit lattice effects and resonances.

However, it is likewise conceivable that the particles are embedded in the matrix in an uncontrolled arrangement. For instance, the particles can be arranged randomly in the matrix. Said randomness can be of different nature depending on the method of producing the heating device. For instance, and as will be explained in greater detail below, the matrix comprising the embedded particles can be generated from a dispersion comprising said particles, and wherein the dispersion is spin coated, dip coated, spray coated, etc. In other words, the particles can be embedded in the matrix following a thermal and/or stochastic distribution. Such an uncontrolled arrangement is associated with a broadness in the behaviour of the particles when being exposed to electromagnetic radiation, such as exhibiting a broad absorption.

The particles are preferably optically transmissive and particularly preferably optically transparent in the visible region of the electromagnetic spectrum. Additionally or alternatively, the particles are preferably configured to absorb impinging electromagnetic radiation in the near-infrared and/or in the infrared region of the electromagnetic spectrum. Additionally or alternatively, the matrix is preferably optically transmissive and particularly preferably optically transparent in the visible region of the electromagnetic spectrum.

That is, the first wavelength region and the second wavelength region preferably differ from one another. In other words, it is preferred that an optical transmission characteristics of the matrix differs from an absorption characteristics of the particles.

The first wavelength region preferably corresponds to the visible region of the electromagnetic spectrum.

The second wavelength region preferably corresponds to the near-infrared and/or the infrared region of the electromagnetic spectrum.

The visible region of the electromagnetic spectrum is understood as comprising electromagnetic radiation having a wavelength in the region of 300 nanometer to 720 nanometer.

The near-infrared region (NIR) of the electromagnetic spectrum is understood as comprising electromagnetic radiation having a wavelength in the region of 720 nanometer to 2000 nanometer.

The infrared region of the electromagnetic spectrum is understood as comprising electromagnetic radiation having a wavelength in the region of 2000 nanometer to 1000 micrometer.

The matrix being optically transmissive in the visible region of the electromagnetic spectrum means that at least at least 80 % of incident electromagnetic radiation, more preferably at least 90 % such as 95 % of said impinging visible radiation is transmitted through the matrix.

Said transmission can be measured with a UV-VIS/NIR photospectrometer as it is known in the art.

The particles being configured to absorb impinging electromagnetic radiation in the near-infrared and/or the infrared region of the electromagnetic spectrum means that at least 50%, more preferably at least 80 % of said impinging near-infrared and/or infrared radiation is absorbed by the particles.

Said absorption can be measured with a UV-VIS/NIR photospectrometer as it is known in the art.

Furthermore, the particles are preferably optically transmissive and particularly preferably optically transparent in the visible region of the electromagnetic spectrum. In particular, the particles are preferably optically transmissive and particularly preferably optically transparent such that at least 80 %, more preferably at least 90 % such as 95 % of impinging visible radiation is transmitted through the particles.

The absorption and/or transmission of the particles can be measured when the particles are embedded in the matrix and/or when the particles are dispersed in a dispersion, see also further below. In both case differential measurements are performed to account for the host medium, i.e. the matrix or the solution in which the particles are dispersed. These differential measurements are a standard procedure in photospectroscopy and well-known to the skilled person in the art.

It is furthermore preferred that a concentration of the particles in the matrix is such that an absorption of the particles in the NIR is enhanced. In other words, the matrix comprising the embedded particles is preferably optically thick in the NIR.

Hence, the heating device according to the invention preferably comprises or consists of a photothermal element that is optically transmissive and in particular optically transparent, wherein the embedded particles are preferably most absorptive in the near-infrared region and/or the infrared region of the electromagnetic spectrum where a significant fraction of thermal energy sources lie, thus maintaining visible transparency. This aspect is particularly important when the heating device is applied on transparent surfaces such as lighting devices that shall remain transparent, see further below.

The particles preferably comprise or consist of at least one metallic compound and/or are oxides. Additionally or alternatively, the particles are preferably electrically conducting. Additionally or alternatively, the particles are preferably optically transmissive in the first wavelength region of the electromagnetic spectrum. Additionally or alternatively, the particles are preferably nanoparticles. Additionally or alternatively, a weight of the particles preferably equals or is larger than a weight of the matrix.

The particles are preferably metal oxides and/or mixed oxides.

Mixed oxides are oxides that comprise cations of two or more different chemical elements or cations of a single chemical element in several states of oxidation, respectively. A preferred mixed oxide is indium tin oxide (ITO).

The particles are preferably optically transmissive in the first wavelength region of the electromagnetic spectrum and particularly preferably optically transmissive in the visible region of the electromagnetic spectrum.

In particular, the particles particularly preferably have a strong absorption in the NIR and transmission at VIS of the electromagnetic spectrum.

The particles are particularly preferably optically transmissive and electrically conducting oxides, so-called transparent conducting oxides (TCO), such as indium tin oxide (ITO). However, other transparent conducting oxides as they are known in the art are likewise conceivable such as antimony doped tin oxide (ATO), indium tin oxide (ITO), indium zinc oxides (IZO), cadmium oxide (CdO), fluorine doped tin oxide (FTO, $SnO_2$:F), or aluminium doped zinc oxide (AZO, ZnO: Al).

Other particularly preferred particles are conjugated polymer nanoparticles (CPNs) as they are known in the art and disclosed in [29], for example PTB7. CPNs are a family of macromolecules with large delocalized $\pi$-conjugated backbones. Compared to quantum dots, they show lower cytotoxicity, high photostability, high fluorescence, and no blinking, making them favorable for a variety of biological applications. Their strong optoelectronic performances and fluorescence allow their use for combined diagnostics and treatment, in theranostics applications. In particular, they are used for cancer therapy because they can locally heat tumors after being irradiated by the adequate laser light. They have thus a strong photothermal capability. Their size is about 50-100 nm and they are well dispersed in polymer matrices.

The particles are preferably electrically conducting. In fact, and as mentioned earlier, the particles are particularly preferably NIR-absorbent. Said NIR-absorption is preferably basically a free-carrier absorption phenomenon in the conduction band of the particles. An electrical conductivity of Transparent Conductive Oxides (TCOs) can originate from the free carriers. As such, the particles can be electrically conductive.

It is furthermore preferred that the particles are coated with a coating. Said coating preferably serves the purpose of enhancing a dispersion of the particles in the dispersion solution being used to generate the matrix, see further below. As such, the coating preferably is at least one dispersant. Said dispersant can be a dispersant known in the state of the art. For instance, the dispersant can be a polymeric dispersant such as a water-soluble polymer, for instance polyvinylpyrrolidone (PVP). For example, PVP can be adsorbed on the particles such as on ITO nanoparticles. However, alternative methods for enhancing the dispersion of the particles are likewise conceivable. For example, a surface of the particles could be functionalized. To this end it is particularly preferred that a direct synthesis of surface-functionalized particles such as ITO nanoparticles is performed as known in the state of the art and disclosed in [28].

It is furthermore preferred that the particles are chemically resistant to moisture.

Particles being nanoparticles means that the particles preferably have a diameter in the nanometer range. For instance, the particles preferably have a diameter of 100 nanometer or less, preferably of 50 nanometer or less such as 20 nanometer or less.

However, it should be noted that other diameters of the particles are likewise conceivable. In particular, it is preferred that a maximum diameter of the particles is defined by when a scattering cross section of the particles starts to manifest itself in the optical behavior of the particles. In fact, a diameter of the particles such that the scattering cross-section is preferably 5 % of an extinction cross-section, more preferably 10 % of the extinction cross-section.

A preferred concentration or number density of the particles being arranged in the matrix is preferably such that the particles absorb at least 50 %, more preferably at least 80 % of impinging electromagnetic radiation in the NIR region of the electromagnetic spectrum.

Furthermore, a weight of the particles is preferably equal to or greater than a weight of the matrix. For instance, a weight ratio between the weight of the particles to the weight of the matrix preferably is between 1:1 to 100:1, such as between 10:1 to 70:1. In fact, the weight ratio preferably depends on the method of producing the heating device as will be explained in detail further below. For instance, in the event of the heating device being manufactured by spray coating, the weight ratio preferably is between 20:1 to 100:1 such as about 70:1. In the event of the heating device being manufactured by dip coating, the weight ratio preferably is between 1:1 to 10:1 such as about 7:1.

The matrix can be electrically conducting or electrically insulating.

Additionally or alternatively, the matrix can comprise or consist of at least one polymer. Said at least one polymer preferably is a soluble polymer. Additionally or alternatively, said at least one polymer preferably is a natural polymer or a synthetic polymer.

Preferred natural polymers are polysaccharides and derivatives thereof. A preferred polysaccharide is cellulose and preferred derivatives thereof are cellulose derivatives. Preferred cellulose derivatives are celluloseether such as ethyl cellulose.

Preferred synthetic polymers are plastic polymers such as thermoplastics. Preferred thermoplastic polymer are vinyl polymers such as poly(vinyl alcohol), polyethylene, polypropylene, polystyrene, polyvinyl chloride, polyvinyl acetate or polyacrylonitrile.

Preferred soluble polymers are water-soluble polymers or solvent-soluble polymer.

Preferred solvent-soluble polymers are polysaccharides and derivatives thereof, for instance cellulose derivatives such as celluloseether, in particular ethyl cellulose.

Preferred water-soluble polymers are water-soluble synthetic and/or water-soluble thermoplastic polymers such as poly(vinyl alcohol).

The matrix can be bendable and/or tensile and/or electrically conductive, but does not need to be.

As a first example, the matrix can consist of poly(vinyl alcohol). As such, the matrix can have a conductivity of

$1.63 \times 10^{-12}$ Scm$^{-1}$ at room temperature. A conceivable thermal conductivity is about 0.2 W m$^{-1}$ K$^{-1}$. A conceivable refractive index is 1.48. A conceivable tensile strength is in the range of 40 MPa to 60 MPa. As another example, the matrix can consist of ethyl cellulose. In this case, the tensile strength is in the range of 47 MPa to 72 MPa, a volume resistivity is in the range of 10^12 to 10^14 Ohm cm, and a refractive index is 1.47.

However, it is preferred that the matrix has a certain thermal conductivity. In particular, a thermal conductivity of the matrix is preferably such that the heat being generated by the photothermal element can diffuse to a surface of the heating device. As an example, a conceivable matrix can have a thermal conductivity of 0.2 W m$^{-1}$ K$^{-1}$.

Furthermore, a Biot number of the matrix preferably is smaller than 1. The Biot number characterises whether the heat transfer is limited by the thermal conductivity of a material or an outside convection. The matrix according to the invention preferably is isothermal, i.e. its conductivity is preferably sufficiently large within the heating device. As such, it is preferred that its Biot number Bi is smaller than 1.

The photothermal element preferably is a composite material comprising or consisting of the particles being embedded in the matrix. That is, the photothermal element preferably comprises or consists of a composite material. Said composite material is particularly preferably provided by the matrix and the particles being embedded therein.

Additionally or alternatively, the photothermal element is preferably provided as one or more layers. The photothermal element is particularly preferably provided as one or more of the layers of composite material mentioned above. In the event of two or more layers being present, they are preferably arranged above one another with respect to a vertical direction of the heating device, i.e. they preferably form a stack. In the event of two or more layers being present, it is furthermore preferred that these two or more layers form a single-piece element. That is, it is conceivable that the photothermal element is produced layer by layer in a layering approach, wherein the individual layers are however not distinguishable in the final photothermal element. Said layering approach facilitates the generation of a thick photothermal element.

At this point it is noted that the matrix can comprise one type of particles or two or more different types of particles. Different types of particles can be different particles as such, e.g. different transparent conducting oxides such as ITO and ATO. Another example of different particles as such are ITO particles that differ in their doping. Different types of particles can also be the same particles that differ in their diameter, e.g. ITO particles of smaller and larger sizes.

Hence, such different types of particles can be provided within a single matrix, e.g. a single layer such as single composite material layer comprising different types of particles.

Additionally or alternatively, it is conceivable that the photothermal element comprises two or more layers such as two or more composite material layers, and wherein the type of particles being embedded in these layers differ from one another. For instance, a first layer could be provided that comprises ATO and a second layer could be provided that comprises ITO, etc. However, and as mentioned earlier, these different layers are preferably not distinguishable in the final photothermal element.

A thickness of the photothermal element along the vertical direction of the heating device preferably is 10 micrometer or less, more preferably 5 micrometer or less.

In another aspect, a lighting device comprising at least one heating device as described above is provided.

Any statements made herein regarding the heating device per se preferably likewise apply to the lighting device comprising such a heating device and vice versa.

The lighting device preferably is a vehicle lighting such as a headlamp, an indicator light, a warning light, a break light or the like.

That is, the heating device according to the invention is preferably provided on and/or in a lighting device such as a vehicle lighting for a vehicle. However, it is likewise conceivable to provide the heating device according to the invention in a variety of other lighting devices such as street lamps, medical lighting devices such as endoscopes, etc.

Moreover, the lighting device such as the vehicle lighting preferably corresponds to a commercially available lighting device and/or to a lighting device known in the state of the art.

That is, the lighting device preferably comprises a light source, i.e. a source of electromagnetic radiation such as a lamp or bulb that is arranged in an enclosure. The bulb preferably being of the incandescent type, i.e. a bulb being filled with a gas such as tungsten, halogen, xenon, argon, krypton, etc. Further conceivable components of the lighting device preferably depend on the use of the lighting device. For instance, in the event of the lighting device being a vehicle lighting preferred further components of the vehicle lighting are a reflector, a glass pane, optical lenses, etc. as they are known in the state of the art.

The heating device can be directly or indirectly provided on a surface, preferably on an interior surface and/or an exterior surface, of the lighting device.

Moreover, the heating device can be provided as a coating on a surface, preferably on an interior surface and/or on an exterior surface, of the lighting device.

The interior surface of the lighting device preferably faces towards the source of electromagnetic radiation such as the lamp or bulb of the lighting device, see also above and below. However, it is also conceivable that the heating device is arranged on an exterior surface of the lighting device, i.e. on a surface that is arranged opposite to the interior surface and that faces towards an outside of the lighting device. Furthermore, it is conceivable that at least one heating device is arranged on the interior surface and that at least one heating device is arranged on the exterior surface of the lighting device.

In the event of the heating device being arranged directly on the surface of the lighting device it is preferred that a surface contact is formed, at least in regions, between the heating device, in particular the photothermal element, and the surface of the lighting device.

In the event of the heating device being arranged indirectly on the surface of the lighting device it is preferred that the heating device is arranged on a carrier element, and wherein said carrier element is attachable to the surface of the lighting device. The carrier element preferably is optically transmissive and particularly preferably optically transparent in the first wavelength region of the electromagnetic spectrum. Conceivable carrier elements are adhesive foils or suspended films or the like that can be mounted on a surface of the lighting device, for instance onto the headlight in the event of the lighting device being a vehicle lighting.

It is particularly preferred that the heating device is provided as a coating on a surface of the lighting device. That is, the heating device, in particular the photothermal element and particularly preferably the matrix is preferably configured as at least one adhering layer that is applied to the surface of the lighting device. That is, the matrix is preferably configured to exert adhesive forces when being arranged on a surface. Various processes of applying said coating are conceivable, see further below. In the event of the heating device being provided as a coating it is preferred that the heating device is directly provided on a surface of the lighting device.

In any case it is furthermore preferred that the heating device is arranged on a part of the lighting device that is transmissive for electromagnetic radiation in the visible region of the electromagnetic spectrum. For instance, polycarbonate (PC) resin and glass are widely used as materials for optical lenses of headlamps of vehicles such as cars such that it is particularly preferred to arrange the heating device on an optical lens of the lighting device in the form of a vehicle lighting. Additionally or alternatively it is likewise conceivable to arrange the heating device on a reflector and/or on a glass pane and/or on the enclosure or any other component of the lighting device in the form of the vehicle lighting.

The lighting device preferably further comprises at least one source of electromagnetic radiation that is configured to emit electromagnetic radiation. Said source of electromagnetic radiation is preferably arranged such that its emitted electromagnetic radiation impinges on the heating device. Additionally or alternatively, said source of electromagnetic radiation is preferably configured to emit electromagnetic radiation in the second wavelength region of the electromagnetic spectrum.

As mentioned earlier, the source of electromagnetic radiation preferably is a light source, in particular a lamp or bulb. It is furthermore preferred that said lamp or bulb is commercially available and/or known in the state of the art, in particular in the field of automotive industry. Examples of conceivable light sources are a halogen lamp, a xenon lamp, or any other preferably high-intensity discharge lamp known in the art.

Moreover, the source of electromagnetic radiation, in particular the lamp or bulb, is preferably configured to emit electromagnetic radiation in the second wavelength region of the electromagnetic spectrum, i.e. to emit radiation that can be absorbed by the particles of the photothermal element and that can be transmitted through the matrix.

In another aspect, a vehicle comprising at least one lighting device as described above is provided.

Any statements made herein regarding the vehicle comprising the lighting device preferably likewise apply to the lighting device per se and vice versa.

The vehicle can be any vehicle known in the art, for instance an automobile, a plane, a train, etc. The vehicle preferably is a commercially available vehicle, wherein just the lighting device, preferably actually just at least one heating device according to the invention, has been provided.

In another aspect, a method of producing a heating device for preventing or removing a deposition, in particular for de-misting such as de-fogging or anti-misting such as anti-fogging, is provided. Said heating device preferably corresponds to the heating device as described above. The method comprises the step of providing at least one photothermal element being configured to exhibit a photothermal effect upon an impingement of electromagnetic radiation. The photothermal element comprises particles being embedded in a matrix. The matrix is optically transmissive in a first wavelength region of the electromagnetic spectrum of the impinging electromagnetic radiation. The particles are configured to absorb impinging electromagnetic radiation in a second wavelength region of the electromagnetic spectrum and are further configured to dissipate the absorbed electromagnetic radiation as heat, whereby the temperature of the heating device is elevated.

Any statements made herein regarding the heating device per se preferably likewise apply to the method of producing the heating device and vice versa.

The photothermal element is preferably provided by dispersing the particles in a solution, whereby a dispersion solution is formed.

A volume of the dispersed particles per total volume of the dispersion solution preferably is 10 % or less. For instance, the volume of the dispersed particles per total volume of the dispersion solution can be in the range of 2 % by volume to 10 % by volume per total volume of the dispersion solution.

The solution preferably comprises at least one dissolved polymer.

To this end it is conceivable that the dispersion solution is formed by 1) dissolving at least one polymer in a solution and by subsequently 2) dispersing the particles in said solution.

These steps can however likewise be reversed, wherein the dispersion solution is formed by 1) dispersing the particles in a solution and by subsequently 2) dissolving at least one polymer in said dispersion.

For instance, a stock dispersion of dispersed particles and a base solution comprising the dissolved polymer could be prepared in a first step. In a subsequent second step, the stock dispersion can be diluted with the base solution, whereby the dispersion solution is formed.

The stock dispersion preferably comprises the particles being dispersed in at least one solvent that preferably prevents aggregation of the particles and allows for an easy dispersion of the particles in the polymer matrix. Various solvents are conceivable, with ethanol being one example.

The base solution preferably corresponds to a water-based solution comprising a dissolved water-soluble polymer or to a solvent-based solution comprising a dissolved solvent-soluble polymer, see also below.

Hence, the dispersion solution preferably comprises a water-based solution and the polymer preferably is a water-soluble polymer. Alternatively, the dispersion solution preferably comprises a solvent-based solution and the polymer preferably is a solvent-based polymer.

The water-based solution preferably comprises or consists of water, in particular distilled water.

The water-soluble polymer preferably is a water-soluble synthetic polymer and/or water-soluble thermoplastic polymers such as poly(vinyl alcohol).

The water-based solution preferably comprises between 0.1 % by weight to 10 % by weight of the water-soluble polymer per total weight of the water-based solution.

More preferably, the water-based solution comprises between 0.5 % by weight to 5 % by weight of the water-soluble polymer per total weight of the water-based solution. Particularly preferably the water-based solution comprises between 1 % by weight to 3 % by weight such as about 2 % by weight of the water-soluble polymer per total weight of the water-based solution.

An example of a preferred water-based solution comprises or consists of distilled water that has 2 % by weight of dissolved poly(vinyl alcohol) per total weight of the water-based solution.

The solvent-based solution preferably comprises or consists of at least one organic and/or inorganic solvent. Additionally or alternatively, the solvent-based solution preferably comprises or consists of a volatile solvent. A preferred solvent-based solution comprises or consists of ethanol.

The solvent-soluble polymer preferably is a polysaccharide and derivatives thereof, for instance cellulose derivatives such as celluloseether, in particular ethyl cellulose.

The solvent-based solution preferably comprises between 0.01 % by weight to 1 % by weight of the solvent-soluble polymer per total weight of the solvent-based solution.

More preferably, the solvent-based solution comprises between 0.05 % by weight to 0.5 % by weight of the solvent-soluble polymer per total weight of the solvent-based solution. Particularly preferably the solvent-based solution about 0.1 % by weight of the solvent-soluble polymer per total weight of the solvent-based solution.

An example of a preferred solvent-based solution comprises or consists of ethanol that has 0.1 % by weight of dissolved ethyl cellulose per total weight of the solvent-based solution.

Furthermore, an amount of the water-soluble polymer and/or of the solvent-soluble polymer in the solution preferably depends on the method of manufacturing the photothermal element, in particular whether it is manufactured by spray coating the dispersion solution or by dip coating. For instance, in the event of the photothermal element being provided by spray coating it is preferred that an amount of the dispersed particles preferably is in the range of 0.05 % by weight to 2 % by weight such as about 0.1 % by weight of dispersed particles per total weight of the dispersion solution. In this case it is furthermore preferred that the dispersion solution is a solvent-based solution comprising a dissolved polymer being a solvent-soluble polymer such as ethyl cellulose being dissolved in ethanol. In the event of the photothermal element being provided by dip coating it is preferred that an amount of the dispersed particles preferably is in the range of 1 % by weight to 4 % by weight such as about 2 % by weight of dispersed particles per total weight of the dispersion solution. In this case it is furthermore preferred that the dispersion solution is a water-based solution comprising a dissolved polymer being a water-soluble polymer such as PVA being dissolved in water.

In any case it is preferred that a concentration of the dispersed particles is between 0.5 % by weight to 20 % by weight of dispersed particles per total weight of the solution, more preferably between 1 % by weight to 10 % by weight of dispersed particles per total weight of the solution.

That is, the water-based solution preferably comprises between 0.5 % by weight to 20 % by weight of dispersed particles per total weight of the water-based solution, more preferably between 1 % by weight to 10 % by weight of dispersed particles per total weight of the water-based solution.

Likewise, the solvent-based solution preferably comprises between 0.5 % by weight to 20 % by weight of dispersed particles per total weight of the solvent-based solution, more preferably between 1 % by weight to 10 % by weight of dispersed particles per total weight of the solvent-based solution.

The dispersion solution is preferably applied on a surface of a substrate. The surface is preferably a surface of a lighting device and particularly preferably of a vehicle lighting.

The dispersion solution can be applied by at least one of: spin coating, dip coating, spray coating, sputtering, thermal evaporation, atomic layer deposition, chemical vapour deposition, wet chemistry, microprinting or nanoprinting.

That is, various processes for applying the dispersion solution to a surface of a substrate of interest in order to generate the photothermal element are conceivable.

For instance, the photothermal element can be generated by dip coating the surface of a substrate of interest with the dispersion solution. To this end it is preferred that the dispersion solution does not comprise a highly volatile solvent since this could leave non-uniform strains on the substrate. As such, a preferred dispersion solution for dip coating comprises a low- or non-volatile solvent such as water. Consequently, it is preferred that the dispersion solution furthermore comprises a dissolved water-soluble polymer such as poly(vinyl alcohol). In order to apply the dispersion solution onto the surface, the surface is submerged and subsequently retracted out of the dispersion solution. These actions are preferably performed at a constant speed in order to generate a uniform layer of the dispersion solution and finally of the composite material layer on the surface.

As another example, the photothermal element can be generated by spray coating the dispersion solution on the surface of a substrate of interest. To this end it is preferred that the dispersion solution comprises a low-surface tension volatile solvent in order to enhance a spreading of the dispersion solution on the surface and to avoid trapping of air bubbles on the coated surface after the spraying. As such, a preferred dispersion solution for spray coating comprises for instance ethanol and a dissolved solvent-soluble polymer such as ethyl cellulose. The spray coating can be performed by using a spray gun such as Paasche Air-brush, VLS-3AS, held on a fixture. After mounting the surface of interest in front of the spray gun, the dispersion solution is sprayed onto the surface.

As mentioned initially, the particles can be embedded in the matrix according to an uncontrolled arrangement. To this end it is preferred to apply the dispersion solution to the surface by at least one of spin coating, dip coating, spray coating, sputtering, thermal evaporation, atomic layer deposition, chemical vapour deposition or wet chemistry, wherein ultimately a photothermal element comprising a matrix having particles being embedded in a thermal and/or stochastic manner is formed.

However, if the particles shall be embedded in the matrix according to a determined arrangement, it is preferred that the dispersion solution is micro-printed or nano-printed on the surface.

The following table lists some concrete examples of conceivable solvents and particles that can be used to prepare a dispersion solution for forming a photothermal element according to the invention via spraycoating and dipcoating, respectively.

| Materials for spraycoating | wt% | vol% |
|---|---|---|
| Ethyl cellulose (in ethanol) | 0.1 | 0.09 |
| ITO | 2 | 0.28 |
| | 4 | 0.56 |
| | 7 | 0.98 |
| Materials for dipcoating | | |
| PVA (in water) | 2 | 1.67 |
| ITO | 2 | 0.28 |
| | 4 | 0.56 |
| | 8 | 0.98 |

The particles ITO were $In_2O_3:SnO_2=90:10$ particles with a diameter of 18 nanometer.

The amount "wt%" refers to weight of the material per total weight of the dispersion solution. For instance, 0.1 wt% of ethyl cellulose in ethanol means that a dispersion solution comprising 0.1 % by weight of ethyl cellulose per total weight of the dispersion solution.

The amount "vol%" refers to the volume of the material per total volume of the dispersion solution. For instance, 0.087719 vol% of ethyl cellulose in ethanol means that a dispersion solution comprising 0.087719 % by volume of ethyl cellulose per total volume of the dispersion solution was used.

The surface comprising the applied dispersion solution is preferably dried, whereby the matrix comprising the particles being embedded therein is formed.

That is, after the application of the dispersion solution on the surface of a substrate of interest, it is preferred to dry the applied dispersion solution, whereby the final photothermal element is formed.

As mentioned earlier, the photothermal element can comprise one or more layers. To this end it is conceivable to apply one or more layers of the dispersion solution, wherein said one or more layers will dry and thereafter form a single-piece photothermal element in which the individual layers, if any, are no longer distinguishable.

The drying is preferably performed by air impingement and/or by applying heat, for instance by placing the surface comprising the dispersion solution on a hot plate.

In another aspect, particles are used for producing a photothermal element of a heating device according to the method as described above.

Any statements made herein regarding the use of the particles for producing the photothermal element of a heating device preferably likewise apply to the heating device per se, to the lighting device comprising the heating device, and to the method of producing the heating device and vice versa.

BRIEF DESCRIPTION OF THE DRAWINGS

Preferred embodiments of the invention are described in the following with reference to the drawings, which are for the purpose of illustrating the present preferred embodiments of the invention and not for the purpose of limiting the same. In the drawings,

Fig. 1a shows a schematics of a heating device according to the invention and being arranged on a surface, wherein electromagnetic radiation of different wavelength regions are irradiated;

Fig. 1b shows another schematics of a heating device according to the invention being arranged on a surface, wherein the heating device comprises a photothermal element having particles being embedded in a matrix;

Fig. 1c shows a diagram depicting the spectral absorbance of a heating device according to the invention as a function of a concentration of its particles, wherein the insert are photographs of a surface comprising an image being arranged below a heating device according to the invention;

Fig. 1d shows a diagram depicting an absorption spectrum of a heating device according to the invention when being irradiated with near infrared radiation;

Fig. 2a shows a schematics of an experimental setup used for measuring a temperature elevation and a defogging performance of a heating device according to the invention;

Fig. 2b shows a diagram depicting the temperature elevation of surfaces being coated with heating devices with varying particle concentrations according to the invention;

Fig. 2c shows a diagram depicting an interval plot (95% confidence interval) of steady-state temperature elevation of a control surface and surfaces being coated with the heating devices according to figure 2b after 240 seconds;

Fig. 2d shows a schematics of a heat resistor model to determine a temperature of a heating device according to the invention under high environmental heat losses (forced convection);

Fig. 3a shows a sequence of photographs depicting the evolution of a defogged area on a surface being coated with a heating device according to the invention and compared to an uncoated control surface;

Fig. 3b shows a diagram depicting a time evolution of the fogged area fraction on surfaces being coated with heating devices with varying particle concentrations according to the invention and compared to a control surface;

Fig. 3c shows a diagram depicting an interval plot interval (95% confidence interval) of the mean time to defog the control surface and the surfaces being coated with the heating devices according to figure 3b;

Fig. 4a shows a sequence of photographs of a lighting device at different points in time, wherein half of the lighting device is coated with a heating element according to the invention and wherein another half of the lighting device is uncoated and serves as control;

Fig. 4b shows a diagram depicting transmittance and absorption spectra of surfaces comprising heating devices according to the invention that are dipcoated and spraycoated;

Fig. 4c shows a diagram depicting an interval plot (95% confidence interval) comparing the temperature elevations between surfaces comprising heating devices with varying particle concentrations and that are dipcoated and spraycoated.

DESCRIPTION OF PREFERRED EMBODIMENTS

Various aspects of a heating device 1 according to the invention shall now be explained in greater detail with reference to the figures.

In particular, the heating device 1 is configured to de-mist such as de-fog or anti-mist such as anti-fog a surface 9 of a substrate 10 of interest it is applied on. To this end, the heating device 1 comprises at least one photothermal element 2 being configured to exhibit a photothermal effect upon an impingement of electromagnetic radiation. Said photothermal element 2 comprises or consists of particles 3 being embedded in a matrix 4. The matrix 4 is optically transmissive in a first wavelength region of the electromagnetic spectrum of impinging electromagnetic radiation. Moreover, the particles 3 are configured to absorb impinging electromagnetic radiation in a second wavelength region of the electromagnetic spectrum and are further configured to dissipate the absorbed electromagnetic radiation as heat, whereby the temperature of the heating device 1 is elevated. Thereby, a temperature of the substrate 10 the heating device 1 is arranged on is elevated as well, wherein depositions on the surface 9 of the substrate 10 such as water droplets are removed.

The first wavelength region and the second wavelength region of the electromagnetic spectrum differ from one another. In particular, the particles 3 are preferably optically transparent in the visible region of the electromagnetic spectrum while they are configured to absorb impinging electromagnetic radiation in the near-infrared and/or in the infrared region of the electromagnetic spectrum. The matrix 4 in turn is preferably optically transparent in the visible region of the electromagnetic spectrum.

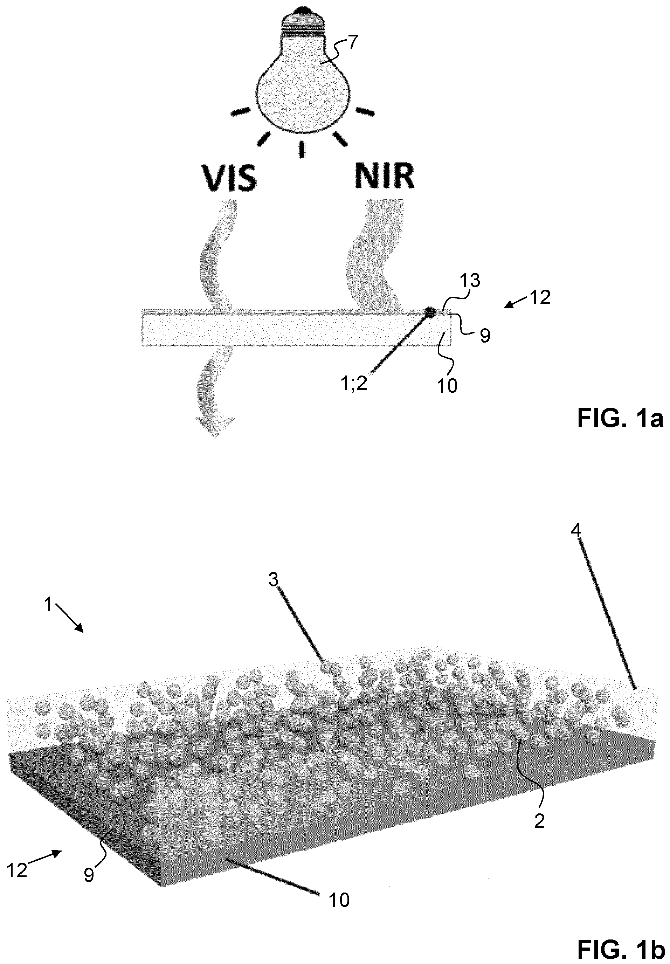

This is schematically illustrated in figures 1a and 1b. In particular, figure 1a depicts a heating device 1 being provided as a coating on the surface 9 of the substrate 10. In the present example, the heating device 1 consists of a photothermal element 2 in the form of a layer of composite material comprising a polymer matrix 4 and embedded indium tin oxide nanoparticles (ITO-NP) 3, which act as a heat absorbing medium with high visible transparency. Said coated substrate is placed in front of a source of electromagnetic radiation 7 radiating substantially at NIR wavelengths, e.g., a halogen, xenon, or any high-intensity discharge lamp. Whereas said electromagnetic radiation in the NIR region of the electromagnetic spectrum is absorbed and generates heat, electromagnetic radiation of other wavelengths such as in the form of visible light passes through the heating device 1 and, in the event of a transparent substrate 10 as it is the case in figure 1a through the substrate 10 as well. For instance, said substrate 10 could be a lighting device 5 in the form of a vehicle lighting such as an automotive headlamp assembly, wherein ambient humidity and low temperature lead to condensation of fog droplets on the lens during non-operational period. When the lamp 7 of the headlamp assembly 5 is on, the radiative absorption in near-infrared wavelengths by the particles 3 rapidly increases the surface temperature and hence accelerates defogging. Simultaneously, high transmittance of the heating device 1 at visible wavelengths ensures unhindered operation of the lamp 7. Field tests show excellent defogging performance of the heating device 1 when applied to a realistic car headlamp assembly.

Figure 1b is a schematic representation of the heating device 1 consisting of a photothermal element 2 in the form of the composite material being arranged on a conceivable substrate 10. In particular, said composite material 2 comprises a matrix 4 that forms a dielectric host with embedded indium tin oxide (ITO) nanoparticles 3. In particular, polycarbonate (PC) resin and glass are widely used as materials for car headlamp lenses. To this end 1 mm thick, 30 mm x 30 mm square PC sheets (D-ITET Workshop, ETH Zurich), and 1 mm thick, 25 mm x 25 mm square glass slides (VWR, CH) were used as base substrates 10 for the experiments that will be presented in the following. The heating device 1 is prepared by dispersing ITO nanoparticles (ITO-NP) in a polymer solution (ethyl cellulose, EC or polyvinyl alcohol, PVA), whereby a dispersion solution is obtained. Said dispersion solution is then applied on the substrates 10 with spray and dip coating techniques, which are highly suitable for industrial scalability and which resulted in spray coated and dip coated substrates, respectively.

In particular, the preparation of spray coated substrates was as follows: A base solution for spray coating comprising ethanol, a low-surface tension volatile solvent, and 0.1 wt% (0.087 vol%) ethyl cellulose (Merck) was prepared, and a binder polymer readily soluble in ethanol was dissolved in the base solution. This low-surface tension and volatile solvent is chosen in order to enhance instant spreading of the dispersion solution on the substrate and to avoid trapping of air bubbles on the coated surface after the spraying. ITO-NP (US Research Nanomaterials, Inc.) as the radiation absorbing particles to be embedded in the matrix were used. To this end an off-the-shelf stock dispersion comprising 20 wt% ITO- NP with mean diameter: 18 nm in ethanol was used. The stock dispersion of ITO-NP is first diluted with the base solution in order to obtain the final ITO-NP concentrations of 2, 4 and 7 wt% (0.28, 0.56 and 0.98 vol%, respectively).

The spray coating is performed using a spray gun (Paasche Air- brush, VLS-3AS) held on an in-house built fixture. After mounting the substrates in front of the spray gun at a distance of 150 mm, 600 $\mu$L dispersion solution was sprayed with a pressure of 1.5 bar. Immediately after spraying the dispersion solution, the substrate is dried with air impingement and subsequently dried on a hot plate at 70°C for 5 min.

The preparation of dip coated substrates was as follows: The solution for dip coating is water-based because a highly volatile solvent leaves non-uniform stains on the substrate during the slow sample-retraction phase due to evaporative deposition. A base solution comprising 2 wt% (1.67 vol%) polyvinyl alcohol (Kuraray Poval 28-99) in water was prepared. After that, polyvinylpyrrolidone-coated ITO-NP powder (18 nm mean diameter, US Research Nanomaterials, Inc.) is dispersed in the base solution to obtain final ITO-NP concentration of 2, 4 and 7 wt% (0.28, 0.56 and 0.98 vol%, respectively). Said dispersion solution is homogenized by a brief probe sonication, followed by a prolonged bath sonication until the NP clusters are completely dispersed in the dispersion solution.

The dip coating is performed using a motorized linear stage (Thorlabs, NRT100). An in-house built fixture with the linear stage facilitates immersion and retraction of the vertically held substrate in a 40 mL solution bath at a constant speed of 5 mm s-1 with a dip time of 1 min. The substrates are dried on a hot plate at 70°C for 5 min after removing from the setup.

In the following said coated substrates, or substrates 10 comprising a heating device 1 being arranged on their surface 9, are also referred to as samples 12. Furthermore, the heating device 1 is sometimes referred to as coating or composite material.

The heating device 1 is characterized with respect to its spectral response, temperature elevation, and defogging performance, i.e., the time required for evaporation of the fog droplets from the surface 9 of the substrates 10. Light absorption by the heating device 1 leads to a proportional temperature increase of the coated surface 9. Therefore, the spectral absorbance characterizes the thermal performance of the heating device 1, in particular of its photothermal element 2 in the form of the composite material.

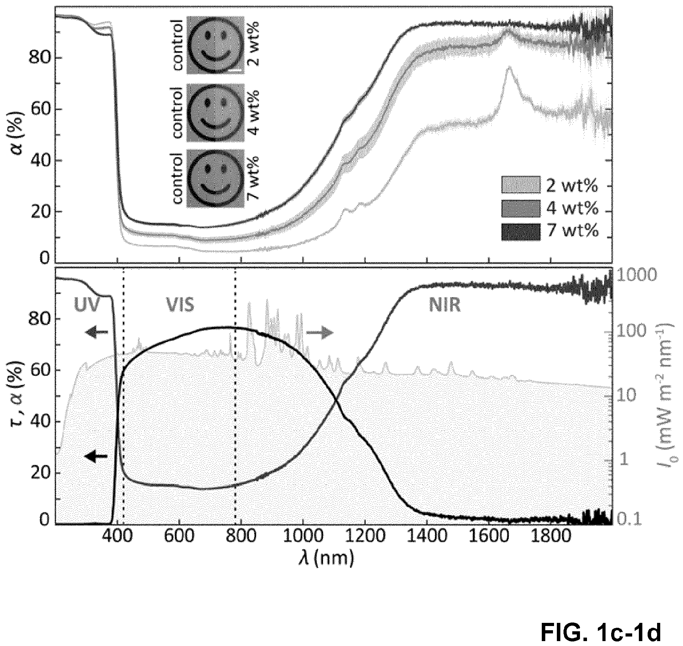

In order to understand the role of ITO- NP concentration on the photothermal effect, the heating device 1, here the composite material 2, is characterized with respect to the spectral absorbance. Figure 1c shows the spectral absorbance ($\alpha$) of PC samples spray-coated with 2, 4, and 7 wt% ITO-NP composite, i.e. figure 1c depicts the spectral absorbance as a function of ITO nanoparticles' concentrations. The spectral absorbance is measured with a spectrophotometer (Jasco, V770 with an ILN-925 integrating sphere at near-normal incidence) from 200-2000 nm which comprises the ultraviolet (UV, 200-420 nm), visible (VIS, 420-780 nm) and near-infrared (NIR, 780-2000 nm) wavelengths. For each coated substrate, the transmittance ($\tau$) and reflectance ($r$) are measured, and the corresponding absorbance is calculated as $\alpha = 1 - \tau - r$. Due to the increasing number density of nanoparticles, the absorbance increases monotonically with increasing ITO-NPs concentration. The absorbance tends to reach a limit at higher ITO-NP concentration when most of the incident radiation is already absorbed in the NIR. Any further increase in the concentration does not significantly contribute to the mean absorbance of the composite but rather starts reducing visible transparency. The transparency of the coated substrates can be observed qualitatively from insert photographs, where the control and the coated substrates are placed over printed images with white backgrounds. The scale bars denote 5 mm. The inserts indicate that the transparency of the control and the coated substrates are practically similar. To further understand the ability of the heating device to effectively harness the radiative power from the light source, the spectral response of the coated substrates was characterized.

In particular, figure 1d shows the spectral absorbance and transmittance of PC samples spray-coated with 7 wt% ITO-NP coatings overlaid with the spectral intensity distribution of the lamp 7 and illustrates the potential of absorbing incident thermal radiation in the NIR spectrum while maintaining the required transparency at VIS. The lamp 7 being used was a xenon arc lamp, whose spectral intensity is broadband over visible and near-infrared wavelengths and therefore facilitates radiation absorption and heat production by the composite material. Moreover, for automotive applications, high-intensity discharge (HID) lights often use xenon arc lamps. In order to test the samples 12 under comparable level of illumination the temperature rise is measured by placing the sample 12 in front of a xenon UV-IR light source (Newport, 66901) 7. The radiation intensity is adjusted such that it emulates a 60 W car headlamp projected on a 20 cm x 30 cm area. Note that this is the most conservative (low intensity) value, as usually car headlights contain several light bulbs and thus the real radiation intensity is higher. As readily follows from figure 1d, the absorption of near infrared radiation is almost 100% while 70% of the visible transparency is preserved. The spectral intensity of the xenon arc lamp 7 is also presented.

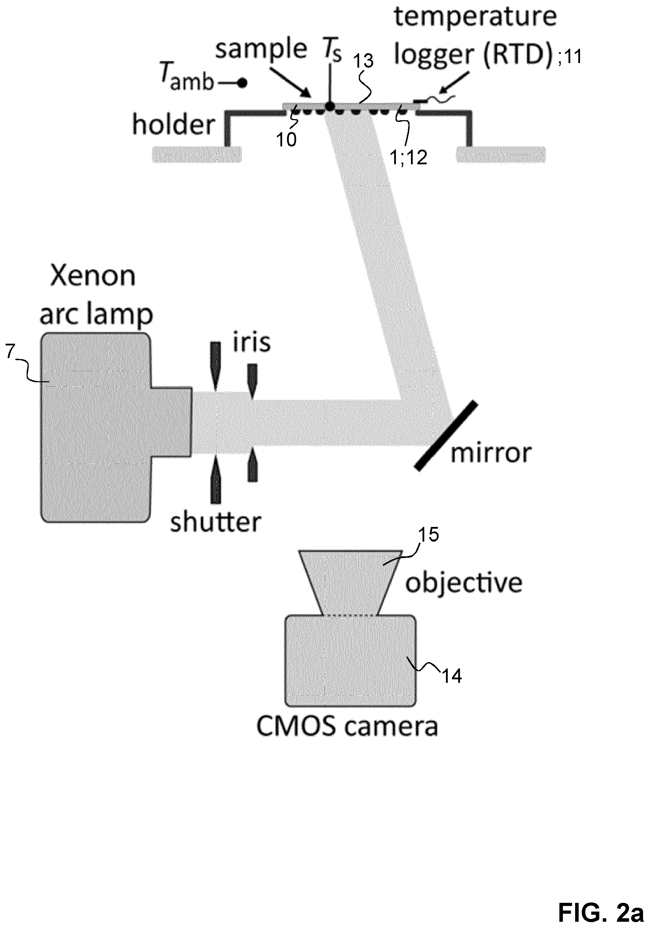

Figure 2a depicts a schematic of an experimental setup used for measuring the temperature elevation and defogging performance. In particular, the temperature rise is measured by placing resistance temperature detectors (RTD, PT1000) connected to a LucidControl RI8 USB logger 11 on the sample surface 13 of the sample 12 and the surroundings, and the data acquisition is controlled by an in-house MATLAB script. In the depicted case the sample surface 13 corresponds to an outside surface of the heating device 1. In order to avoid direct heating from the light source 7 and to ensure unhindered exposure of the sample 12 to the imposed radiation, the RTD 11 is attached to the edge of the sample 12, see figure 2a. The low thermal conductivity of polycarbonate (0.2 Wm$^{-1}$K$^{-1}$) precluded the temperature measurement at the edge of the sample 12.

Therefore, glass substrates 10 (1 Wm$^{-1}$K$^{-1}$) were used for measuring the temperature rise. The defogging performance of the heating device 1 is examined in the same setup as depicted in figure 2a. First, the coated polycarbonate sample 12 is placed on a Peltier-cooled (Laird MS2-192-14-20-11-18) copper disk, maintained at a temperature of 3°C. The water vapor from the ambient air (relative humidity, $RH$ = 48%) condensed on the coated surface 13 of the sample 12 for 5, 10, and 20 min. Immediately after that, the sample 12 is placed in the experimental setup depicted in figure 2a with the fogged sample surface 13 facing the light source 7. The evaporation of the fog droplets is recorded with a detection device 14 in the form of a CMOS camera (FLIR BFS-U3-51S5C-C) with an objective (MVL7000-18-108 mm) 15 and the captured images are analyzed offline to determine the fraction of the defogged area with time.

The efficacy of the heating device 1 for fast defogging is demonstrated with a real car headlamp assembly (Volvo, TYC 20-5403- 08-2). The headlamp assembly is equipped with a halogen lamp (Philips 12V, 55W H3), an aluminum reflector (Bosch) and a glass lens (Bosch HCR E1 20). In order to compare the performance of the heating device 1 with a control surface, one half of a surface of the lens area (104 cm$^2$) is coated with a heating device 1 in the form of a 4 wt% ITO-NP composite. During the experiment, a room humidifier (Maxi Fogger) is used to fog the inside surface of the lens with a fog deposition rate of 500 mL h$^{-1}$. Immediately after that, the lens is reassembled in front of the lamp 7 and the disappearance of the fog droplets is recorded with a phone camera.

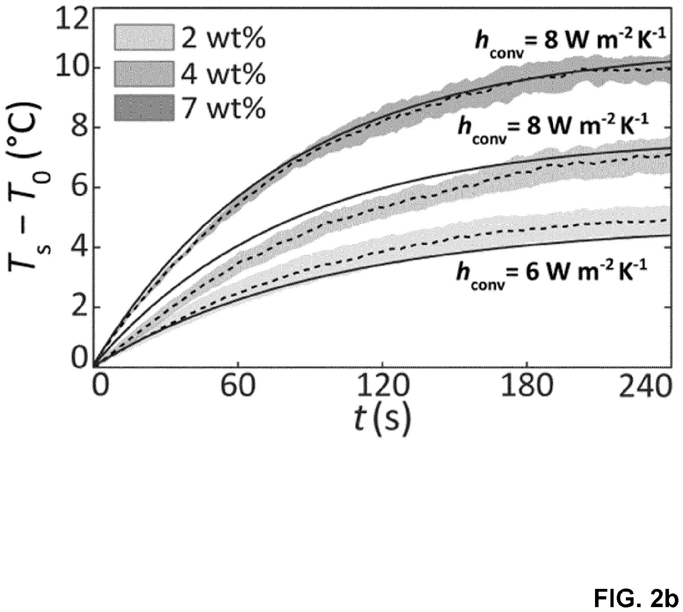

The transient behavior of the temperature elevation over the initial surface temperature (To) of the heating device 1 with glass substrates and under an intensity of 1053 W m$^{-2}$ is shown in figure 2b. To this end the temperature elevation in dry conditions of coated glass substrates with varying ITO-NP concentrations (2, 4 and 7 wt%) was measured. In general, the surface temperature increases at a faster rate in the beginning, until the natural convective, conductive, and radiative heat losses from the surface balance the radiative absorption and the subsequent heating. Eventually, the surface temperature reaches a plateau. The steady state surface temperature increases with increasing ITO-NP concentration. For a concentration of 7 wt% ITO-NP, the surface temperature increases by 10 °C compared to 2 °C for an uncoated control surface. The evaporation time (*ts* ) of a sessile water droplet scales with the substrate temperature as *ts* ~ *Ts*-2.3 [23]. Accordingly, the evaporation time of the fog droplets on the coated surface is estimated to be approximately half of that compared to the uncoated surface. However, the defogging of a substrate involves evaporation of many droplets with varying size and inter-droplet distances, which add complexity to the estimation of the defogging time.

The temperature evolution of the samples 12 was estimated with a transient heat transfer model:

$$\frac{d}{dt}\left(mc_pT_s(t)\right) = A\overline{\alpha}I_0 - 8A\varepsilon\sigma T_{amb}^3 * (T_s(t) - T_{amb}) -$$

$$2Ah_{conv}(T_s(t) - T_{amb}) \qquad (1)$$

Here, *m* is the sample mass, *cp* (= 800 J kg-1 K-1) the specific heat capacity, *Ts* the sample temperature, *A* the surface area of the sample (25 mm x 25 mm), $\overline{\alpha}$ the mean absorbance over the light source spectrum, $\varepsilon$ ($\approx$ 1) the thermal emissivity of the sample and $\sigma$ the Stefan-Boltzmann constant. $I_0$ represents the irradiance from the light source (Newport Xenon arc lamp, 6258). $T_{amb}$ is the ambient temperature (set constant to 23 °C) and $h_{conv}$ the convective heat transfer coefficient.

As the temperature increase of the sample above ambient is less than 10 °C, i.e. *dT* = ($T_s$ - $T_{amb}$ « $T_{amb}$), the radiative heat transfer term was linearized using a Taylor series expansion and all higher order terms were dropped, avoiding the quartic dependence on *Ts.*

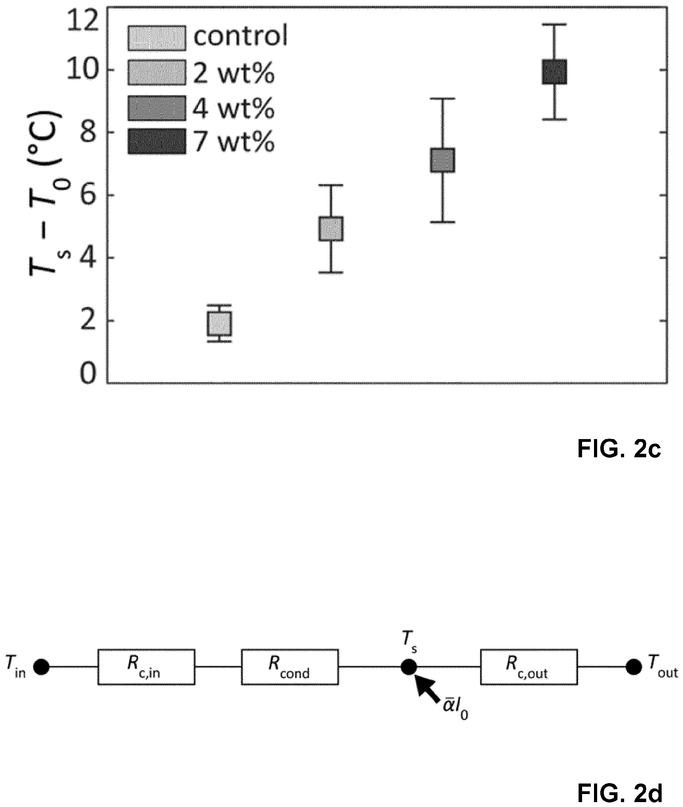

In order to estimate $h_{conv}$, the Rayleigh number $Ra_L$ = 142'390 was determined and the Nusselt number was determined to be $Nu_L = 0.54 * Ra_L^{\frac{1}{4}} = 10.49$ . Finally the convective heat transfer coefficient can be determined as $h_{conv} = \frac{\lambda_{air}*Nu_L}{L} = 10.49$ Wm$^{-2}$K$^{-1}$ [24].A dustcover on top of the experimental setup leads to a slight reduction of the convective airflow. Hence, based on this first estimate and by varying *hconv* within a reasonable range (6 to 8 Wm-2K-1) [25], our model aligns closely with the experimental measurements and results. Moreover, experiments with a higher surface temperature theoretically result in a higher $h_{conv}$, which aligns with our experimental findings. It is worthwhile to mention that the steady-state temperature elevation shows a monotonic increase with the ITO-NP concentration and attains approximately a five-fold rise in the temperature elevation for 7 wt% ITO-NP as compared to the control, as shown in figure 2c. In particular, figure 2c shows an interval plot of the steady-state temperature elevation of the sample after 240 seconds. As follows from figure 2c, there is a five-fold increase with respect to the control.

As fogging also occurs when a car is moving, the heating device 1 must be functional under conditions with higher convective losses. Hence, the coating temperature *Ts* was theoretically determined under such conditions using a thermal resistor model, as shown in figure 2d. Assuming that the temperature inside ($T_{in}$) and outside ($T_{out}$) the car headlight are the same ($T_{in}$ = $T_{out}$ = $T_{amb}$), $T_s$ can be expressed as:

$$T_s = T_{amb} + \overline{\alpha}\frac{I_0*R_{c,\in*}(R_{cond}+R_{c,out})}{R_{c,\in}+R_{cond}+R_{c,out}}, \qquad (2)$$

where $R_{c,\in}$ and $R_{c,out}$ represent the convective heat resistances inside and outside the headlight, and $R_{cond}$ the conductive resistance through the headlight (PC). Assuming convective heat transfer coefficients of 8 and 100 Wm$^{-2}$K$^{-1}$ for the inside and outside, respectively, $\overline{\alpha}$ =25% (corresponding to the 4wt% coating) and a headlight thickness of 1 mm with a typical thermal conductivity for PC (0.2 Wm-1K-1), the resistance values are $R_{c,\in}$= 0.125 m2 KW-1, $R_{c,\in}$=0.01 m2 KW-1 and $R_{cond}$ = 0.005 m2KW-1. With these values, $T_s$ is 3.5°C higher than $T_{amb}$, evidencing that the heating device is still effective even when the car is moving.

We finally also tested the durability of the heating device under freezing and hot conditions. For this, we placed the sample 12 for 1h into a freezer at -20°C and for 2h into an oven at 70°C and measured the optical properties before and after each step. No degradation could be detected, indicating that the heating device 1 endures such harsh conditions. We further tested the stability of the heating device 1 over prolonged light exposure. The sample 12 was illuminated by the xenon arc lamp 7 for 60 hours. Even after such a long exposure, the optical properties of the heating device 1 did not deteriorate. Hence, it has been shown that the heat resistor model can be used to determine the temperature of the heating device 1 under high environmental heat losses (forced convection). Even under such conditions, the heating device 1 reaches a significant temperature increase above ambient.

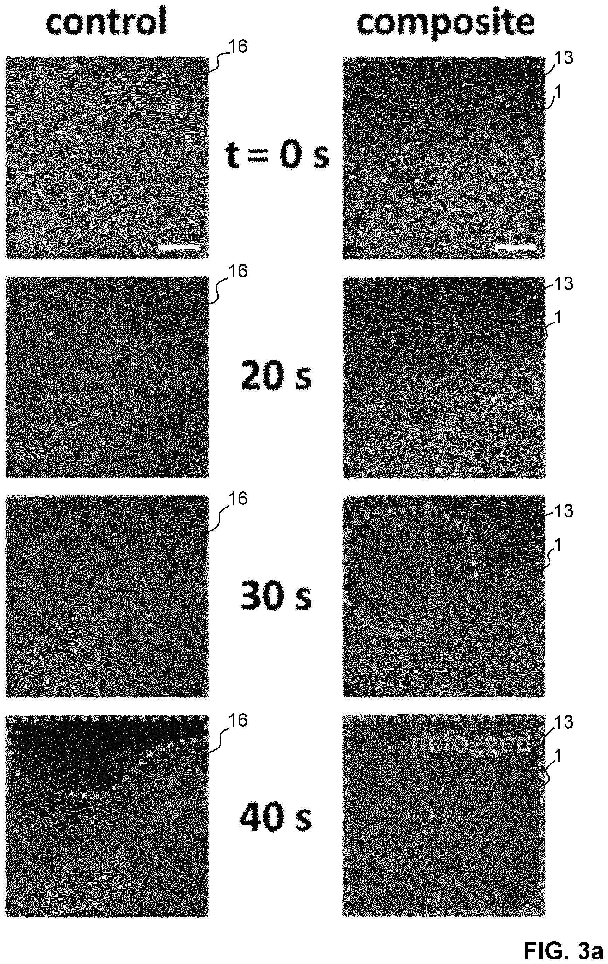

The defogging performance is further illustrate with reference to figures 3a to 3c. In particular, figure 3a shows a sequence of photographs of an uncoated surface (control) 16 and of a sample surface 13 being coated with a heating device 1 that is here again the composite material 2 mentioned earlier. The scale bars denote 5 mm. Figure 3a serves the purpose of comparing the defogging performance of the control 16 and the coated (7% w/v ITO-NP) sample surface 13. One can observe that after 40 s of light exposure the coated sample surface 13 is completely defogged, whereas only 25% of the exposed area is defogged on the control surface 16. Therefore, it is evident that the defogging is much faster and helped by the composite material properties of the heating device 1. The defogging performance of the heating device 1 is quantified in terms of the fraction of the exposed area covered by fog.

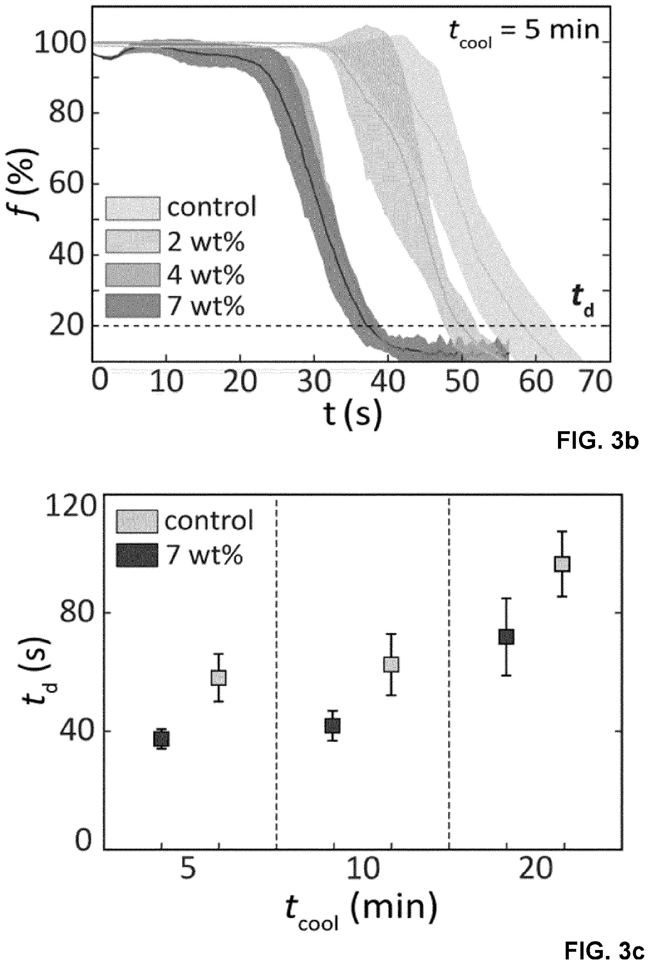

Figure 3b shows the time evolution of the fogged area fraction on different surfaces. The time evolution of the fogged fractional area $f$ for different ITO-NP concentration indicates that the defogging speed on the coated surface is much faster than that of the control. We define the defogging time ( ) to be the duration after which 80% of the exposed area is defogged. With increasing ITO-NP concentrations, we clearly observe improvement in the defogging time, which is nearly 55% faster for the samples with 7 wt% ITO-NPs compared to the control. To understand the effect of the initial water content, we further increased the residence time ($tco$ ) of the samples on the Peltier-cooled stage, thus increasing the initial amount of condensed water on the surfaces. The results shown in figure 3b were obtained with the residence time of 5 min, whereas we tested the performance of 7 wt% coated samples with $tcool$ =10 and 20 min. Hence, it readily follows that the coated surfaces recover their transparency faster than the control.

Figure 3c shows an interval plot (95 % confidence interval) of mean time to defog the control and the composite surfaces for varying ITO-NP concentrations. The variation of $td$ with $tcool$ for the control and the coated surfaces indicates that $t_d$ decreases markedly for the coated surface for all examined values of $t_{cool}$.

The defogging performance (DP) of the heating device under varying initial water content can be further quantified by comparing the average defogging speed, i.e., the mass of the evaporated water per unit time, for coated and uncoated samples, respectively. The initial water content is given by $m_f = \dot{m_f} t_{cool}$, where $\dot{m_f}$ is the rate of water condensation on the sample surface. Therefore, the defogging performance parameter can be defined as $DP =$

$$0.8 t_{cool} \left[ \left( \frac{1}{t_d} \right)_{composite} - \left( \frac{1}{t_d} \right)_{control} \right]$$

, where the subscripts 'composite' and 'control' signify the coated and uncoated substrates, respectively. For $t_{cool}$ = 5,10 $\wedge$ 20 min, DP = 2.2, 3.8 and 3.4, respectively. Based on this observation we predict that the cheating device performs better with increased initial water content, e.g., on surfaces which accumulate and condense water droplets over several hours, such as overnight.

Finally, we assessed the real-world functionality of the heating device 1. For this, we tested the performance of the heating device 1 in the form of a coating in a car headlamp assembly 5 of a car 8 by observing the evaporation of fog droplets on both control 16 and coated surfaces 13.

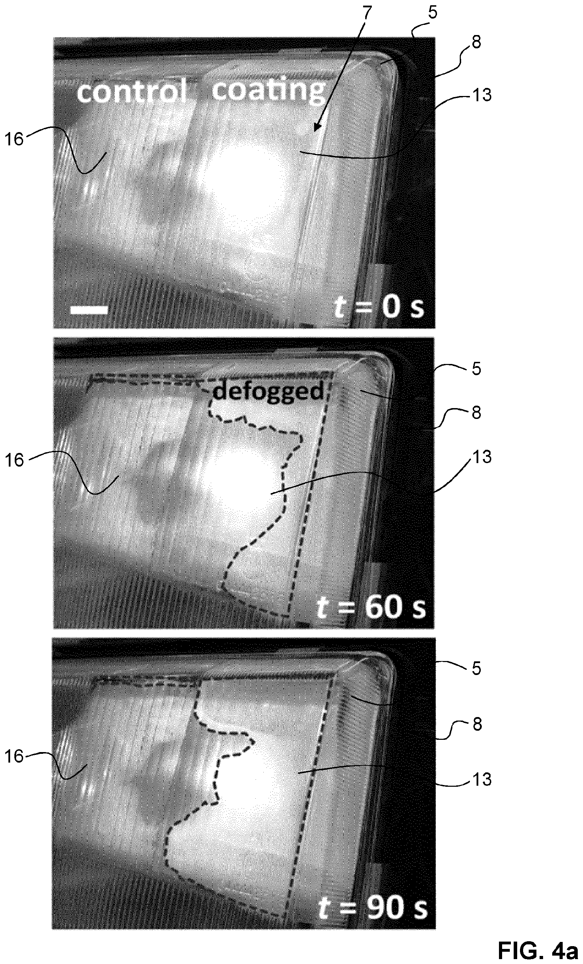

Figure 4a shows a sequence of photographs of a car headlight 5 with one half of its surface 6 being the sample surface 13 that is spray coated with a 4 wt% ITO-NP composite material and the other half being an uncoated control 16. In the photographs the drying fronts are marked by dashed lines shown at different instants. Nearly 80% of the coated area dries within 90 s by the light emitted from the car lamp 7, whereas the uncoated area remains almost completely fogged. Additionally, we assessed the defogging performance of the coating 1 with an external fan in front of the headlamp lens in order to simulate the convective cooling on a moving vehicle. The wind speed of the fan was 4.7 m/s. The complete defogging of the coated and uncoated areas took 3 and 11 min, respectively, demonstrating 3.5 times faster reinstatement of the transparency. These observations indicate that the coating can be applied on the lens surfaces of an automotive headlamp assembly for rapid defogging. Hence, from figure 4a it can be concluded that under nominal operation the initially fogged headlight recovers its full transparency faster than the control.

In particular, after 90 seconds the coated section is free of fog while the uncoated part remains fogged. The scale bars denote 2 cm.

The suitability of the heating device is also determined by the scalability of the coating method. In automotive manufacturing plants, the headlamp lenses are made by injection moulding of polymethyl methacrylate (PMMA) or PC [26]. After that, a UV-protective layer is applied on the lens surface by spray coating, followed by a heat-curing step [27].

Our method of applying the heating device by spray coating and the subsequent heat-drying conforms well with such coating methods and incorporates itself easily into the standard manufacturing processes.

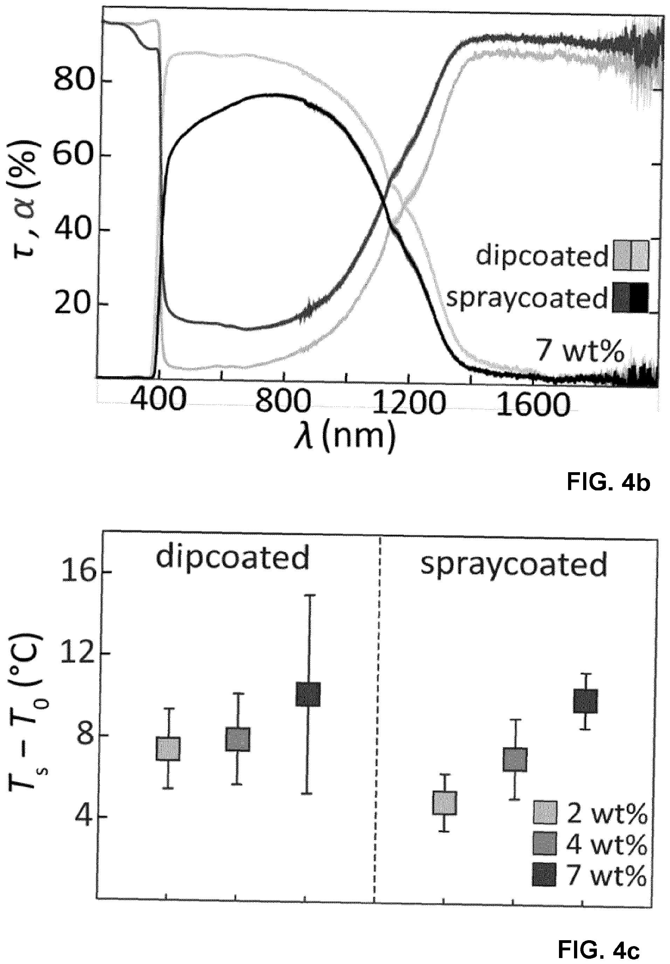

Another widely used, facile, and industrially scalable technique for surface treatment is dip coating. There the substrate is submerged and subsequently retracted out of the coating solution at a constant speed, generating a uniform conformal layer of the coating material on the substrate. We further demonstrate the preparation of the heating device on a surface with dip coating and assess the photothermal performance. Figures 4b and 4c show the performance of the dip coated samples and their comparison with the spray coated samples. The dip coated samples were visually more uniform than the spray coated samples because dip coating creates a continuous thin film, whereas spray coating relies on the impingement of micron-sized atomized droplets on the substrate. It is also worth mentioning that both coatings have similar thicknesses with an estimate of 1 $\mu$m for the 7 wt% case. Figure 4b shows the spectral transmittance and absorbance of spray and dip coated 7 wt% ITO- NP coatings on PC substrates. The dip coated samples show higher transmittance in the visible spectrum and slightly lower absorbance in the near-infrared spectrum as compared to the spray coated samples. That is, the roughness of the sprayed coating provides a slightly larger absorbance. Figure 4c depicts the temperature elevations in dry conditions between spray and dip coated surfaces for different ITO-NP concentrations (2, 4 and 7 wt%). The temperature elevation of the dip coated samples with 2, 4, and 7 wt% are almost similar to the temperature elevation of the spray coated samples except a slightly higher temperature elevation for dip coated samples with 2 wt% ITO-NP concentration. Although a different set of coating parameters are expected to produce wide variations in the thermal and defogging performance of the samples, the current combination of the parameters with the used range of ITO-NP concentrations demonstrates the suitability of our composite material for rapid defogging applications.

Hence, in conclusion it can be said that the heating device according to the invention can act as a light-activated, thin, and passive coating with high transparency in the visible spectrum and strong absorbance in the near-infrared spectrum. The spectral selectivity with a broadening of the absorbance in the near-infrared is achieved through the fabrication of a composite material with indium tin oxide nanoparticles in a polymer matrix. The composite material can be deposited on glass and polycarbonate substrates by either spray or dip coating, adding anti- and defogging functionalities. Under illumination conditions simulating those of a car headlight, the optical absorbance of the coating leads to a temperature rise of up to 10°C, which is 5 times higher than the temperature rise of the equivalent uncoated surface. This thermal response is exploited for rapid recovery of the visibility of a fully fogged coated surface under light illumination. We show that the coating performance and the radiation absorbance is adjustable and performs well even under moderate concentrations of our absorbing nanoparticles. We validate the real-world usage of such coating by applying it to the glass lens of a car headlamp and proving its defogging performance under realistic conditions. Finally, its facile fabrication allows its large-scale application using standard industrial processes such as spray and dip coating.

In particular, based on nucleation thermodynamics, the photothermal element of the heating device provides a photo-induced heating effect that enables sustained and superior fog removal and prevention when compared to uncoated samples. In addition, the heating element such as in the form of a coating can be fabricated with readily and cost-effectively scalable industrial methods such as spray or dip coating. Its functionality is evidenced with standard visible thermal sources and on predominant materials employed, for instance, in car headlights (such as glass and polycarbonate), which enables its direct application also on existing such surfaces.

References

[1] I. R. Duran and G. Laroche, "Current trends, challenges, and perspectives of anti-fogging technology: Surface and material design, fabrication strategies, and beyond," Prog. Mater. Sci., vol. 99, pp. 106-186, Jan. 2019, doi: 10.1016/J.PMATSCI.2018.09.001.

[2] J. B. Chemin et al., "Transparent anti-fogging and self-cleaning TiO2/SiO2 thin films on polymer substrates using atmospheric plasma," Sci. Reports 2018 81, vol. 8, no. 1, pp. 1-8, Jun. 2018, doi: 10.1038/s41598-018-27526-7.

[3] L. Yao et al., "Long-Lived Multilayer Coatings for Smart Windows: Integration of Energy-Saving, Antifogging, and Self-Healing Functions," ACS Appl. Energy Mater., vol. 2, no. 10, pp. 7467-7473, Oct. 2019, doi: 10.1021/ACSAEM.9B01382/ASSET/IMAGES/LARGE/AE9B01382_0004.JPEG.

[4] Z. Zhang, "Antifogging Properties of Spinodal Porous Structures for Optical Application," Langmuir, vol. 38, no. 24, pp. 7448-7454, Jun. 2022, doi: 10.1021/ACS.LANGMUIR.2C00415/ASSET/IMAGES/MEDIUM/LA2C00415_M005.GIF.

[5] "Fogging on the inside of the monitor or lens (COOLPIX AW100)." https://www.nikonimgsupport.com/na/NSG_article?articleNo=000027826&configured=1&l ang=en_SG (accessed Sep. 22, 2022).

[6] E. Drapala, "Experimental Study on Water Condensation in Automotive Headlamp," SAE Tech. Pap., Apr. 2010, doi: 10.4271/2010-01-1326.

[7] "The best tricks to combat headlamp condensation." https://www.hella-bulbs.com/en/article/fogged-up-headlamps (accessed Sep. 22, 2022).

[8] "Nighttime Driving Accident Statistics in the U.S. | Injury Claim Coach." https://www.injuryclaimcoach.com/night-time-driving-accident-statistics.html (accessed Sep. 22, 2022).

[9] B. J. Briscoe and K. P. Galvin, "The effect of surface fog on the transmittance of light," Sol. Energy, vol. 46, no. 4, pp. 191-197, Jan. 1991, doi: 10.1016/0038-092X(91)90063-3.

[10] M. Guzej and M. Zachar, "CFD Simulation of Defogging Effectivity in Automotive Headlamp," Energies 2019, Vol. 12, Page 2609, vol. 12, no. 13, p. 2609, Jul. 2019, doi: 10.3390/EN12132609.

[11] "Condensation in your headlights is nothing to worry about - OSRAM Carlight Blog." https://www.carlightblog.com/2018/10/23/condensation-in-your-headlights-is-nothing-to-worry-about/ (accessed Sep. 22, 2022).

[12] "How to Remove Moisture from Headlights - AutoZone." https://www.autozone.com/diy/lighting/how-to-remove-moisture-from-headlights (accessed Sep. 22, 2022).

[13] J. Drelich and A. Marmur, "Physics and applications of superhydrophobic and superhydrophilic surfaces and coatings," Surf. Innov., vol. 2, no. 4, pp. 211-227, Dec. 2014, doi: 10.1680/SI.13.00017/ASSET/IMAGES/SMALL/SUFI2-0211-F8.GIF

[14] F. Ç. Cebeci, Z. Wu, L. Zhai, R. E. Cohen, and M. F. Rubner, "Nanoporosity-driven superhydrophilicity: A means to create multifunctional antifogging coatings," Langmuir, vol. 22, no. 6, pp. 2856-2862, Mar. 2006, doi: 10.1021/LA053182P/SUPPL_FILE/LA053182PSI20051123_025344.PDF.

[15] Y. Bai, H. Zhang, Y. Shao, H. Zhang, and J. Zhu, "Recent Progresses of Superhydrophobic Coatings in Different Application Fields: An Overview," Coatings 2021, Vol. 11, Page 116, vol. 11, no. 2, p. 116, Jan. 2021, doi: 10.3390/COATINGS11020116.

[16] S. Sarkar, T. Roy, A. Roy, S. Moitra, R. Ganguly, and C. M. Megaridis, "Revisiting the supplementary relationship of dynamic contact angles measured by sessile-droplet and captive-bubble methods: Role of surface roughness," J. Colloid Interface Sci., vol. 581, pp. 690-697, Jan. 2021, doi: 10.1016/J.JCIS.2020.07.098.

[17] P. Papadopoulos, L. Mammen, X. Deng, D. Vollmer, and H. J. Butt, "How superhydrophobicity breaks down," Proc. Natl. Acad. Sci. U. S. A., vol. 110, no. 9, pp. 3254-3258, Feb. 2013, doi: 10.1073/PNAS.1218673110/SUPPL_FILE/SM06.MOV.

[18] C. Walker et al., "Desublimation frosting on nanoengineered surfaces," ACS Nano, vol. 12, no. 8, pp. 8288-8296, Aug. 2018, doi: 10.1021/ACSNANO.8B03554/SUPPL_FILE/NN8B03554_SI_002.AVI.

[19] Q. Huang et al., "Highly flexible and transparent film heaters based on polyimide films embedded with silver nanowires," RSC Adv., vol. 5, no. 57, pp. 45836-45842, May 2015, doi: 10.1039/C5RA06529A.

[20] Y. Zhao et al., "Oxygen-etchant-promoted synthesis of vertically aligned graphene arrays in a Joule heater and defogger," Diam. Relat. Mater., vol. 120, p. 108697, Dec. 2021, doi: 10.1016/J.DIAMOND.2021.108697.

[21] C. Walker, E. Mitridis, T. Kreiner, H. Eghlidi, T. M. Schutzius, and D. Poulikakos, "Transparent Metasurfaces Counteracting Fogging by Harnessing Sunlight," Nano Lett., vol. 19, no. 3, pp. 1595-1604, Mar. 2019, doi: 10.1021/ACS.NANOLETT.8B04481/ASSET/IMAGES/LARGE/NL-2018-044819_0005.JPEG.

[22] W. Li et al., "Transparent selective photothermal coatings for antifogging applications," Cell Reports Phys. Sci., vol. 2, no. 5, p. 100435, May 2021, doi: 10.1016/J.XCRP.2021.100435.

[23] F. Girard, M. Antoni, S. Faure, and A. Steinchen, "Influence of heating temperature and relative humidity in the evaporation of pinned droplets," Colloids Surfaces A Physicochem. Eng. Asp., vol. 323, no. 1-3, pp. 36-49, Jun. 2008, doi: 10.1016/J.COLSURFA.2007.12.022.

[24] D. P. D. Theodore L. Bergman, Adrienne S. Lavine, Frank P. Incropera, "Fundamentals of Heat and Mass Transfer, 8th Edition," p. 992, 2018, Accessed: Sep. 27, 2022. [Online]. Available: https://www.wiley.com/en-us/Fundamentals+of+Heat+and+Mass+Transfer%2C+8th+Edition-p-9781119353881

[25] M. J. Moran, H. N. Shapiro, D. D. Boettner, and M. B. Bailey, "Fundamentals of Engineering Thermodynamics, 9th Edition | Wiley," pp. 590-618, 2018, Accessed: Sep. 22, 2022. [Online]. Available: https://www.wiley.com/en-us/Fundamentals+of+Engineering+Thermodynamics%2C+9th+Edition-p-9781119391388R120

[26] P. Mitschang and K. Hildebrandt, "Polymer and composite moulding technologies for automotive applications," Adv. Mater. Automot. Eng., pp. 210-229, Jan. 2012, doi: 10.1533/9780857095466.210.

[27] R. Schwalm, "UV coatings: Basics, recent developments and new applications," UV Coatings Basics, Recent Dev. New Appl., pp. 1-310, Dec. 2006, doi: 10.1016/B978-0-444-52979-4.X5000-8.

[28] Haitao Liu, Xiaofei Zeng, Xiangrong Kong, Shuguang Bian, Jianfeng Chen, "A simple two-step method to fabricate highly transparent ITO/polymer nanocomposite films, Applied Surface Science, Vol. 258, Issue 22, September 2012, pages 8564-8569.

[29] Miao Zhao et al., ACS Nano, 2021, 15, 5, 8790.8802 "Theranostic Near-Infrared-Active Conjugated Polymer Nanoparticles".

LIST OF REFERENCE SIGNS

| | |
|---|---|
| 1 | heating device |
| 2 | photothermal element |
| 3 | particles |
| 4 | matrix |
| 5 | lighting device |
| 6 | surface |
| 7 | source of electromagnetic radiation |
| 8 | vehicle |
| 9 | surface |
| 10 | substrate |
| 11 | RTD |
| 12 | samples |
| 13 | sample surface |
| 14 | detection device |
| 15 | objective |
| 16 | control |

**Claims**

**1.** A heating device (1) for preventing or removing a deposition, in particular for de-misting such as de-fogging or anti-misting such as anti-fogging, the heating device (1) comprising or consisting of:

- at least one photothermal element (2) being configured to exhibit a photothermal effect upon an impingement of electromagnetic radiation,

**characterized in that** the photothermal element (2) comprises or consists of particles (3) being embedded in a matrix (4),

wherein the matrix (4) is optically transmissive in a first wavelength region of the electromagnetic spectrum of impinging electromagnetic radiation, and
wherein the particles (3) are configured to absorb impinging electromagnetic radiation in a second wavelength region of the electromagnetic spectrum and are further configured to dissipate the absorbed electromagnetic radiation as heat, whereby the temperature of the heating device (1) is elevated.

**2.** The heating device (1) according to claim 1, wherein the particles (3) are embedded in the matrix (4) according to a determined arrangement, or
wherein the particles (3) are embedded in the matrix (4) according to an uncontrolled arrangement.

**3.** The heating device (1) according to any one of the preceding claims, wherein the particles (3) are optically transmissive and preferably optically transparent in the visible region of the electromagnetic spectrum, and/or

wherein the particles (3) are configured to absorb impinging electromagnetic radiation in the near-infrared and/or in the infrared region of the electromagnetic spectrum, and/or
wherein the matrix (4) is optically transmissive and preferably optically transparent in the visible region of the electromagnetic spectrum.

**4.** The heating device (1) according to any one of the preceding claims, wherein at least one of:

- the particles (3) comprise or consist of at least one metallic compound and/or are oxides,
- the particles (3) are electrically conducting,
- the particles (3) are optically transmissive in the first wavelength region of the electromagnetic spectrum,
- the particles (3) are nanoparticles, or
- a weight of the particles (3) equals to or is larger than a weight of the matrix (4).

5.  The heating device (1) according to any one of the preceding claims, wherein at least one of:

    - the matrix (4) is electrically conducting or electrically insulating, or
    - the matrix (4) comprises or consists of at least one polymer, preferably a soluble polymer and/or a natural polymer or a synthetic polymer.

6.  The heating device (1) according to any one of the preceding claims, wherein the photothermal element (2) is a composite material comprising or consisting of the particles (3) being embedded in the matrix (4), and/or wherein the photothermal element (2) is provided as one or more layers.

7.  A lighting device (5) comprising at least one heating device (1) as claimed in any one of the preceding claims, the lighting device (5) preferably being a vehicle lighting such as a headlamp, an indicator light, a warning light, a break light or the like.

8.  The lighting device (5) according to claim 7, wherein the heating device (1) is directly or indirectly provided on a surface (6), preferably on an interior surface and/or an exterior surface, of the lighting device (5), and/or wherein the heating device (1) is provided as a coating on a surface (6), preferably on an interior surface and/or on an exterior surface, of the lighting device (5).

9.  The lighting device (5) according to claim 7 or 8, wherein the lighting device (5) further comprises at least one source of electromagnetic radiation (7) that is configured to emit electromagnetic radiation, and

    wherein said source of electromagnetic radiation (7) is arranged such that its emitted electromagnetic radiation impinges on the heating device (1), and/or
    wherein the source of electromagnetic radiation (7) is configured to emit electromagnetic radiation in the second wavelength region of the electromagnetic spectrum.

10. A vehicle (8) comprising at least one lighting device (5) as claimed in any one of claims 7 to 9.

11. A method of producing a heating device (1) for preventing or removing a deposition, in particular for de-misting such as de-fogging or anti-misting such as anti-fogging, wherein the heating device (1) preferably corresponds to the heating device (1) as claimed in any one of claims 1 to 6, and wherein the method comprises the steps of:

    - Providing at least one photothermal element (2) being configured to exhibit a photothermal effect upon an impingement of electromagnetic radiation,

    **characterized in that** the photothermal element (2) comprises particles (3) being embedded in a matrix (4),

    wherein the matrix (4) is optically transmissive in a first wavelength region of the electromagnetic spectrum of the impinging electromagnetic radiation, and
    wherein the particles (3) are configured to absorb impinging electromagnetic radiation in a second wavelength region of the electromagnetic spectrum and are further configured to dissipate the absorbed electromagnetic radiation as heat, whereby the temperature of the heating device (1) is elevated.

12. The method according to claim 11, wherein the photothermal element (2) is provided by dispersing the particles (3) in a solution, whereby a dispersion solution is formed.

13. The method according to claim 12, wherein the dispersion solution is applied on a surface (9) of a substrate (10), and

    wherein the surface (9) is a surface (6) of a lighting device (5) and preferably of a vehicle lighting, and/or
    wherein the dispersion solution is applied by at least one of: spin coating, dip coating, spray coating, sputtering, thermal evaporation, atomic layer deposition, chemical vapour deposition, wet chemistry, microprinting or nanoprinting.

14. The method according to claim 13, wherein the surface (6; 9) comprising the applied dispersion solution is dried, whereby the matrix (4) comprising the particles (3) being embedded therein is formed.

15. Use of particles (3) for producing a photothermal element (2) of a heating device (1) according to the method as claimed in any one of claims 11 to 14.

**FIG. 1a**

**FIG. 1b**

FIG. 1c-1d

FIG. 2a

FIG. 2b

**FIG. 2c**

**FIG. 2d**

FIG. 3a

FIG. 3b

FIG. 3c

FIG. 4a

FIG. 4b

FIG. 4c

Europäisches
Patentamt

European
Patent Office

Office européen
des brevets

# EUROPEAN SEARCH REPORT

Application Number

EP 22 20 9546

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | HAITAO LIU ET AL: "A simple two-step method to fabricate highly transparent ITO/polymer nanocomposite films", APPLIED SURFACE SCIENCE, ELSEVIER, AMSTERDAM , NL, vol. 258, no. 22, 9 May 2012 (2012-05-09), pages 8564-8569, XP028399445, ISSN: 0169-4332, DOI: 10.1016/J.APSUSC.2012.05.049 [retrieved on 2012-05-17] | 1-6, 11-15 | INV. C08J7/00 |
| A | * Section 2.3 * | 7-10 | |
| X | US 2016/075883 A1 (EBERT DANIEL R [US] ET AL) 17 March 2016 (2016-03-17) | 1-6, 11-15 | |
| A | * claims 1,6,7,11 * | 7-10 | |
| X | JP 2001 206744 A (CENTRAL GLASS CO LTD) 31 July 2001 (2001-07-31) | 1-6, 11-15 | |
| A | * claims 1-3 * | 7-10 | |
| X | CN 111 960 690 A (UNIV JIANGSU SCIENCE & TECH) 20 November 2020 (2020-11-20) | 1-6, 11-15 | |
| A | * example 1 * | 7-10 | TECHNICAL FIELDS SEARCHED (IPC) C08J C03C |
| X | US 2006/229406 A1 (SILVERMAN LEE A [US] ET AL) 12 October 2006 (2006-10-12) | 1-6, 11-15 | |
| A | * claims 1-5 * | 7-10 | |
| X | JP 2008 019445 A (CENTRAL GLASS CO LTD) 31 January 2008 (2008-01-31) | 1-6, 11-15 | |
| A | * paragraphs [0034] - [0061] * | 7-10 | |
| X | US 2014/023860 A1 (KODAIRA HIROKAZU [JP] ET AL) 23 January 2014 (2014-01-23) | 1-6, 11-15 | |
| A | * examples 1,9,11,12 * | 7-10 | |

-/--

The present search report has been drawn up for all claims

| Place of search | Date of completion of the search | Examiner |
|---|---|---|
| Munich | 25 May 2023 | Saldamli, Saltuk |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 1 of 2

Europäisches
Patentamt

European
Patent Office

Office européen
des brevets

## EUROPEAN SEARCH REPORT

**Application Number**

**EP 22 20 9546**

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br>A | US 2004/251451 A1 (BURGARD DETLEF [DE] ET AL) 16 December 2004 (2004-12-16)<br>* examples 1,2,4 *<br>----- | 1-6,<br>11-15<br>7-10 | |
| X<br>A | US 2007/154724 A1 (MUROMACHI TAKASHI [JP] ET AL) 5 July 2007 (2007-07-05)<br>* claims 1-3 *<br>----- | 1-6,<br>11-15<br>7-10 | |
| X<br>A | WO 2014/010401 A1 (ASAHI GLASS CO LTD [JP]) 16 January 2014 (2014-01-16)<br>* examples 11-16, 21-26 *<br>----- | 1-6,<br>11-15<br>7-10 | |

**TECHNICAL FIELDS
SEARCHED      (IPC)**

The present search report has been drawn up for all claims

| Place of search | Date of completion of the search | Examiner |
|---|---|---|
| Munich | 25 May 2023 | Saldamli, Saltuk |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
................................................................
& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 22 20 9546

This annex lists the patent family members relating to the patent documents cited in  the above-mentioned European search report.
The members are as contained in the European Patent Office EDP file on
The European Patent Office is in no way liable for these particulars which are merely given for the purpose of information.

25-05-2023

| Patent document cited in search report | | Publication date | Patent family member(s) | | Publication date |
|---|---|---|---|---|---|
| US 2016075883 | A1 | 17-03-2016 | NONE | | |
| JP 2001206744 | A | 31-07-2001 | JP | 3961216 B2 | 22-08-2007 |
| | | | JP | 2001206744 A | 31-07-2001 |
| CN 111960690 | A | 20-11-2020 | NONE | | |
| US 2006229406 | A1 | 12-10-2006 | US | 2006229406 A1 | 12-10-2006 |
| | | | WO | 2006102669 A1 | 28-09-2006 |
| JP 2008019445 | A | 31-01-2008 | JP | 4418830 B2 | 24-02-2010 |
| | | | JP | 2008019445 A | 31-01-2008 |
| US 2014023860 | A1 | 23-01-2014 | BR | 112013023912 A2 | 13-12-2016 |
| | | | CN | 103443224 A | 11-12-2013 |
| | | | EP | 2690145 A1 | 29-01-2014 |
| | | | JP | 5942983 B2 | 29-06-2016 |
| | | | JP | 2015212220 A | 26-11-2015 |
| | | | JP | WO2012128332 A1 | 24-07-2014 |
| | | | KR | 20140009383 A | 22-01-2014 |
| | | | US | 2014023860 A1 | 23-01-2014 |
| | | | WO | 2012128332 A1 | 27-09-2012 |
| US 2004251451 | A1 | 16-12-2004 | DE | 10160356 A1 | 26-06-2003 |
| | | | US | 2004251451 A1 | 16-12-2004 |
| US 2007154724 | A1 | 05-07-2007 | JP | 2005139046 A | 02-06-2005 |
| | | | US | 2007154724 A1 | 05-07-2007 |
| | | | WO | 2005044751 A1 | 19-05-2005 |
| WO 2014010401 | A1 | 16-01-2014 | JP | 2015166129 A | 24-09-2015 |
| | | | WO | 2014010401 A1 | 16-01-2014 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **I. R. DURAN ; G. LAROCHE.** Current trends, challenges, and perspectives of anti-fogging technology: Surface and material design, fabrication strategies, and beyond. *Prog. Mater. Sci.,* January 2019, vol. 99, 106-186
- **J. B. CHEMIN et al.** Transparent anti-fogging and self-cleaning TiO2/SiO2 thin films on polymer substrates using atmospheric plasma. *Sci. Reports,* June 2018, vol. 8 (1), 1-8
- **L. YAO et al.** Long-Lived Multilayer Coatings for Smart Windows: Integration of Energy-Saving, Antifogging, and Self-Healing Functions. *ACS Appl. Energy Mater.,* October 2019, vol. 2 (10), 7467-7473
- **Z. ZHANG.** Antifogging Properties of Spinodal Porous Structures for Optical Application. *Langmuir,* June 2022, vol. 38 (24), 7448-7454
- *Fogging on the inside of the monitor or lens (COOLPIX AW100).,* 22 September 2022, https://www.nikonimgsupport.com/na/NSG_article?articleNo=000027826&configured=1&l ang=en_SG
- **E. DRAPALA.** Experimental Study on Water Condensation in Automotive Headlamp. *SAE Tech. Pap.,* April 2010
- *The best tricks to combat headlamp condensation.,* 22 September 2022, https://www.hella-bulbs.com/en/article/fogged-up-headlamps
- *Nighttime Driving Accident Statistics in the U.S. | Injury Claim Coach.,* 22 September 2022, https://www.injuryclaimcoach.com/night-time-driving-accident-statistics.html
- **B. J. BRISCOE ; K. P. GALVIN.** The effect of surface fog on the transmittance of light. *Sol. Energy,* January 1991, vol. 46 (4), 191-197
- **M. GUZEJ ; M. ZACHAR.** CFD Simulation of Defogging Effectivity in Automotive Headlamp. *Energies,* July 2019, vol. 12 (13), 2609
- *Condensation in your headlights is nothing to worry about - OSRAM Carlight Blog.,* 22 September 2022, https://www.carlightblog.com/2018/10/23/condensation-in-your-headlights-is-nothing-to-worry-about
- *How to Remove Moisture from Headlights - AutoZone.,* 22 September 2022, https://www.autozone.com/diy/lighting/how-to-remove-moisture-from-headlights

- **J. DRELICH ; A. MARMUR.** Physics and applications of superhydrophobic and superhydrophilic surfaces and coatings. *Surf. Innov.,* December 2014, vol. 2 (4), 211-227
- **F. Ç. CEBECI ; Z. WU ; L. ZHAI ; R. E. COHEN ; M. F. RUBNER.** Nanoporosity-driven superhydrophilicity: A means to create multifunctional antifogging coatings. *Langmuir,* March 2006, vol. 22 (6), 2856-2862
- **Y. BAI ; H. ZHANG ; Y. SHAO ; H. ZHANG ; J. ZHU.** Recent Progresses of Superhydrophobic Coatings in Different Application Fields: An Overview. *Coatings,* January 2021, vol. 11 (2), 116
- **S. SARKAR ; T. ROY ; A. ROY ; S. MOITRA ; R. GANGULY ; C. M. MEGARIDIS.** Revisiting the supplementary relationship of dynamic contact angles measured by sessile-droplet and captive-bubble methods: Role of surface roughness. *J. Colloid Interface Sci.,* January 2021, vol. 581, 690-697
- **P. PAPADOPOULOS ; L. MAMMEN ; X. DENG ; D. VOLLMER ; H. J. BUTT.** How superhydrophobicity breaks down. *Proc. Natl. Acad. Sci. U. S. A.,* February 2013, vol. 110 (9), 3254-3258
- **C. WALKER et al.** Desublimation frosting on nanoengineered surfaces. *ACS Nano,* August 2018, vol. 12 (8), 8288-8296
- **Q. HUANG et al.** Highly flexible and transparent film heaters based on polyimide films embedded with silver nanowires. *RSC Adv.,* May 2015, vol. 5 (57), 45836-45842
- **Y. ZHAO et al.** Oxygen-etchant-promoted synthesis of vertically aligned graphene arrays in a Joule heater and defogger. *Diam. Relat. Mater.,* December 2021, vol. 120, 108697
- **C. WALKER ; E. MITRIDIS ; T. KREINER ; H. EGHLIDI ; T. M. SCHUTZIUS ; D. POULIKAKOS.** Transparent Metasurfaces Counteracting Fogging by Harnessing Sunlight. *Nano Lett.,* March 2019, vol. 19 (3), 1595-1604
- **W. LI et al.** Transparent selective photothermal coatings for antifogging applications. *Cell Reports Phys. Sci.,* May 2021, vol. 2 (5), 100435
- **F. GIRARD ; M. ANTONI ; S. FAURE ; A. STEINCHEN.** Influence of heating temperature and relative humidity in the evaporation of pinned droplets. *Colloids Surfaces A Physicochem. Eng. Asp.,* June 2008, vol. 323 (1-3), 36-49

- **D. P. D. THEODORE ; L. BERGMAN ; ADRIENNE S. LAVINE ; FRANK P. INCROPERA.** Fundamentals of Heat and Mass Transfer. 27 September 2022, vol. 2018, 992
- **M. J. MORAN ; H. N. SHAPIRO ; D. D. BOETTNER ; M. B. BAILEY.** Fundamentals of Engineering Thermodynamics. Wiley, 2018, 590-618
- **P. MITSCHANG ; K. HILDEBRANDT.** Polymer and composite moulding technologies for automotive applications. *Adv. Mater. Automot. Eng.,* January 2012, 210-229
- **R. SCHWALM.** UV coatings: Basics, recent developments and new applications. *UV Coatings Basics, Recent Dev. New Appl.,* December 2006, 1-310
- **HAITAO LIU ; XIAOFEI ZENG ; XIANGRONG KONG ; SHUGUANG BIAN ; JIANFENG CHEN.** A simple two-step method to fabricate highly transparent ITO/polymer nanocomposite films. *Applied Surface Science,* September 2012, vol. 258 (22), 8564-8569
- **MIAO ZHAO et al.** Theranostic Near-Infrared-Active Conjugated Polymer Nanoparticles. *ACS Nano,* 2021, vol. 15 (5), 8790-8802